(19) Europäisches Patentamt
European Patent Office
Office européen des brevets

(11) Veröffentlichungsnummer: **0 019 285**
**B1**

# (12) EUROPÄISCHE PATENTSCHRIFT

(45) Veröffentlichungstag der Patentschrift: **09.05.84**

(21) Anmeldenummer: **80102728.5**

(22) Anmeldetag: **16.05.80**

(51) Int. Cl.[3]: **C 09 B 1/46**, C 09 B 3/00, C 09 B 5/00, C 09 B 62/06, D 06 P 1/24

## (54) Verfahren zur Herstellung von unsymmetrischen Küpenfarbstoffen der Anthrachinonreihe und deren Verwendung beim Färben und Bedrucken.

(30) Priorität: **17.05.79 CH 4595/79**

(43) Veröffentlichungstag der Anmeldung: **26.11.80 Patentblatt 80/24**

(45) Bekanntmachung des Hinweises auf die Patenterteilung: **09.05.84 Patentblatt 84/19**

(84) Benannte Vertragsstaaten: **CH DE GB LI**

(56) Entgegenhaltungen:
**CH - A - 348 547**
**DE - C - 399 485**
**FR - A - 1 178 224**
**FR - A - 1 410 547**
**FR - A - 2 039 381**

**Ullmann's Enzyklopädie der Technischen Chemie, Band 7 (1956), Seiten 592 + 593**

(73) Patentinhaber: **CIBA-GEIGY AG, Postfach, CH-4002 Basel (CH)**

(72) Erfinder: **Athanassios, Tzikas, Dr., Muttenzerstrasse 78, CH-4133 Pratteln (CH)**

(74) Vertreter: **Berg, Wilhelm, Dr. et al, Dr. Berg, Dipl.-Ing. Stapf, Dipl.-Ing. Schwabe, Dr. Dr. Sandmair Mauerkircherstrasse 45, D-8000 München 80 (DE)**

**EP 0 019 285 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Verfahren zur Herstellung von unsymmetrischen Küpenfarbstoffen der Formel

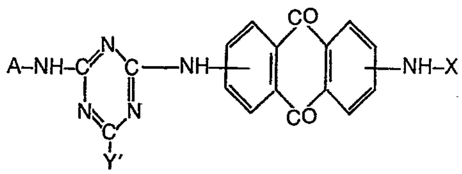 (1),

worin A ein verküpbarer Rest, X ein Acylrest und Y' ein Halogenatom, eine Aminogruppe oder eine Aryloxygruppe ist, wobei A und Y' keinen solchen Anthrachinon- bzw. Aminoanthrachinonrest darstellen, dass symmetrische Farbstoffe entstehen, dadurch gekennzeichnet, dass man eine Verbindung der Formel

$$A\text{–}NH_2 \quad (3),$$

worin A die unter der Formel (1) angegebene Bedeutung aufweist, mit einem 2,4,6-Trihalogen-s-triazin der Formel

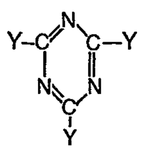 (4),

worin Y ein Halogenatom ist, in Gegenwart eines Kondensationskatalysators in einem inerten organischen Lösungsmittel oder in einem Gemisch solcher Lösungsmittel und vorzugsweise bei erhöhter Temperatur, je nach Lösungsmittel z.B. zwischen 100 und 150 °C, umsetzt und das erhaltene primäre Kondensationsprodukt ohne Zwischenisolierung mit einem Diaminoanthrachinon der Formel

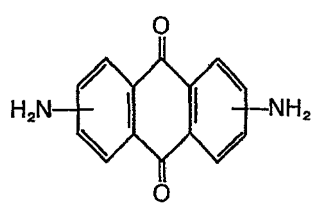 (5),

in einem molaren Verhältnis 1:1 bei einer Temperatur oberhalb 100 °C zu einer Verbindung der Formel

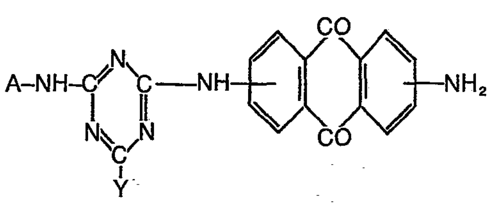 (2),

worin A die unter Formel (1) angegebene Bedeutung hat, und Y ein Halogenatom ist, kondensiert und diese mit einem Acylierungsmittel, welches den Acylrest X aufweist, acyliert, wobei die Acylierung unmittelbar nach der Herstellung der Verbindung (2) und ohne deren Isolierung erfolgt, und dass man gegebenenfalls vor oder nach der Acylierung, mit einem Amin oder einer aromatischen Hydroxyverbindung kondensiert.

In Formel (1) ist im Anthrachinonkern die X–NH-Gruppe an den äusseren Benzolring und das –NH-Brückenglied zum Triazinrest an den inneren Benzolring gebunden. Die X–NH-Gruppe und das –NH-Brückenglied können unabhängig voneinander in α- oder β-Stellung des Anthrachinonkerns stehen.

Als verküpbarer Rest A kommt der Rest eines der bekannten verküpbaren polycyclischen chinoden Ringsysteme in Betracht, z.B. aus der Reihe der Anthrapyrimidine, Anthrapyridone, Anthrapyrimidone, Azabenzanthrone, Benzanthrone, Anthanthrone, Anthrimide, Anthrimidcarbazole, Isothiazolanthrone, Pyrazolanthrone, Pyrimidanthrone, Anthrachinonverbindungen, die sich vom 9,10-Dioxoanthracen ableiten und gegebenenfalls weitere ankondensierte carbocyclische und heterocyclische Ringe enthalten, wie Chinazolinanthrachinone, Oxazolanthrachinone, Thiazolanthrachinone, Oxadiazolanthrachinone, Pyrazolanthrachinone, Pyrazinonanthrachinone, und vorzugsweise in 1- oder 2-Stellung gebundene Reste von Anthrachinonen sowie in 2- oder 8-Stellung gebundene Reste von 3,4-Phthaloylacridonen, wobei all diese Reste die bei Küpenfarbstoffen üblichen Substituenten tragen können. Solche Substituenten sind beispielsweise:

Halogenatome, insbesondere Chlor, Fluor oder Brom, Alkyl-, Alkoxy-, Aryl-, Aryloxy-, Aralkyl-, Aralkyloxy-, Arylamino-, Alkylthio-, Arylthio-, Nitro-, Cyano- und Thiocyanogruppen. Mit Alkyl sind hier und im folgenden insbesondere Reste mit 1 bis 4 Kohlenstoffatomen gemeint, mit Aryl insbesondere Reste wie Phenyl-, Tolyl-, Chlorphenyl-, Methoxyphenyl- oder Naphthylreste und mit Aralkyl insbesondere der Benzylrest. Besonders wichtige Substituenten sind ausserdem die Acyl-und die Acylaminogruppe. Der Begriff Acyl umfasst vor allem Reste von aromatischen Carbon- oder Sulfonsäuren, insbesondere solchen der Benzolreihe oder niedrigmolekulare, d.h. 1 bis 4 Kohlenstoffatome enthaltende Alkanoyl-oder Alkylsulfonylreste, wie z.B. den Acetyl-, Benzoyl-, p-Chlorbenzoyl-, p-Phenylbenzoyl-, Benzolsulfonyl- oder p-Toluolsulfonylrest, ferner niedrigmolekulare Alkoxycarbonylreste sowie Sulfonsäureamid- oder Carbonsäureamidgruppen, deren Stickstoffatom mit Alkyl- oder Arylresten substituiert sein kann, wie z.B. den Äthoxycarbonyl-, Carbamoyl- oder Sulfamoylrest.

Der Acylrest X ist der Rest einer aromatischen Carbonsäure, insbesondere der Benzolreihe, der durch Chlor, Nitro, Methyl, Methoxy u.a. weitersubstituiert sein kann, oder ein Alkanoylrest, der im Alkylteil durch Chlor, Nitro, Phenyl u.a. weitersubstituiert sein kann. Als Beispiele für Acylreste X seien genannt: Benzoyl, p-Chlorbenzoyl, p-Nitrobenzoyl, P = p-Phenylbenzoyl und Acetyl.

Der Substituent Y' ist als Halogenatom Fluor, Chlor oder Brom, als Aminogruppe $-NH_2$ oder insbesondere eine substituierte Aminogruppe,

wie Alkylamino, N,N-Dialkylamino, worin die Alkylreste weitersubstituiert sein können, z. B. durch Halogen, Hydroxy oder Carboxy, N-Alkyl-N-phenylamino, Phenylamino, worin der Phenylrest durch Chlor, Methyl, Methoxy, Carboxy, Nitro u. a. substituiert sein kann, 1-Naphthylamino, Cyclohexylamino oder der Rest eines N-Heterocyclus, wie Piperidino und Morpholino, und als Aryloxygruppe z. B. Phenoxy und Naphthoxy.

Die Verbindungen der Formel (2) können, wie oben beschrieben, z. B. aus den folgenden Komponenten gewonnen werden:

Verbindungen der Formel (3):
1-Aminoanthrachinon,
1-Amino-4-methoxyanthrachinon,
1-Amino-4-acetylaminoanthrachinon,
1-Amino-4-benzoylamino-anthrachinon,
1-Amino-4-(p-toluolsulfonylamino)-anthrachinon,
1-Amino-4-(p-chlorbenzoylamino)-anthrachinon,
1-Amino-4-[p-(N,N-dimethylsulfamido)-benzoylamino]-anthrachinon,
1-Amino-4-phenylthio-athrachinon,
1-Amino-4-(4'-phenyl-benzoylamino)-anthrachinon,
1-Amino-4-chloranthrachinon,
sowie die entsprechenden 1-Aminoanthrachinone, die statt in 4-Stellung in 5- oder 8-Stellung substituiert sind.
2-Amino-anthrachinon,
1-Amino-2-methyl-anthrachinon,
1-Amino-3-chlor-anthrachinon,
1-Amino-6,7-dichlor-anthrachinon,
1-Amino-6-phenylthio-anthrachinon,
1-Amino-7-phenylthio-anthrachinon,
1-Amino-7-chlor-phenylthio-anthrachinon,
1-Amino-7-chlor-6-phenylthio-anthrachinon,
2-Amino-3-chlor-anthrachinon,
2-Amino-4-chlor-anthrachinon,
1-Amino-2-chlor-anthrachinon,
1-Amino-6-chlor-anthrachinon,
1-Amino-3-chlor-6-methyl-anthrachinon,
1-Amino-2-methyl-3-chlor-anthrachinon,
1-Amino-7-chlor-anthrachinon,
2-Amino-3,4-phthaloylacridon,
2-Amino-6- oder -7-chlor-3,4-phthaloylacridon,
2-Amino-6-trifluormethyl-3,4-phthaloylacridon,
2-Amino-5,7-dichlor-3,4-phthaloylacridon,
2-Amino-1,7-dichlor-3,4-phthaloylacridon,
8-Amino-5-chlor-3,4-phthaloylacridon,
7-Amino-1,2-benzo-5,6-phthaloylacridon,
Aminoanthanthron,
5-Aminoisothiazolanthron,
4-Amino-1,1'-dianthrimid-2,2'-carbazol,
Bz-1-Amino-benzanthron,
Bz-1-Amino-2-methyl-benzanthron,
1-Phenyl-5-amino-anthrapyrimidin.

2,4,6-Trihalogen-s-triazine der Formel (4):
2,4,6-Trifluor-s-triazin (Cyanurfluorid),
2,4,6-Trichlor-s-triazin (Cyanurchlorid),
2,4,6-Tribrom-s-triazin (Cyanurbromid).

Diaminoanthrachinone der Formel (5):
1,5-Diaminoanthrachinon, 1,8-Diaminoanthrachinon,
1,7-Diaminoanthrachinon, 1,6-Diaminoanthrachinon,
2,6-Diaminoanthrachinon, 2,7-Diaminoanthrachinon.

Die Kondensationen der Verbindungen der Formel (3), der 2,4,6-Trihalogen-s-triazine der Formel (4) und der Diaminoanthrachinone der Formel (5) werden in einem inerten organischen Lösungsmittel oder in Mischungen von inerten organischen Lösungsmitteln und vorzugsweise bei erhöhter Temperatur, je nach Lösungsmittel z. B. zwischen 100° und 150 °C, ausgeführt. Vorteilhaft gibt man in die Reaktionsmischung einen Kondensationskatalysator, z. B. Diäthylanilin, und leitet während der Umsetzung ein Schutzgas, z. B. Stickstoff, ein.

Die so erhaltene Verbindung der Formel (2) wird anschliessend nach dem erfindungsgemässen Verfahren mit einem Acylierungsmittel und gegebenenfalls mit einem Amin oder einer aromatischen Hydroxyverbindung umgesetzt. Die Umsetzung der Verbindung der Formel (2) mit dem Acylierungsmittel, welches den Acylrest X aufweist, sowie mit einem Amin oder einer aromatischen Hydroxyverbindung erfolgt ebenfalls bei erhöhter Temperatur und vorzugsweise in dem gleichen Lösungsmittel wie die Kondensationen zwischen der Verbindung der Formel (3), dem 2,4,6-Trihalogen-s-triazin der Formel (4) und dem Diaminoanthrachinon der Formel (5). Dabei richtet sich die Reaktionstemperatur im wesentlichen nach dem Siedepunkt des Lösungsmittels. Als inerte organische Lösungsmittel kommen vorzugsweise Nitrobenzol, o-Dichlorbenzol und Trichlorbenzol in Betracht. Gegebenenfalls wird das Acylierungsmittel zusammen mit einem Kondensationskatalysator, z. B. Pyridin, in die Reaktionsmischung gegeben. Aus den oben angegebenen Gründen ist es möglich, die erfindungsgemässen Umsetzungen unmittelbar an die Herstellung der Ausgangsverbindungen der Formel (2) ohne Zwischenisolierung derselben anzuschliessen.

Als Acylierungsmittel, welche den Acylrest X, der die unter Formel (1) angegebene Bedeutung hat, aufweisen, kommen vor allem Halogenide und Anhydride aromatischer und aliphatischer Carbonsäuren in Betracht.

Eine bevorzugte Ausführungsform des erfindungsgemässen Verfahrens ist dadurch gekennzeichnet, dass man von Verbindungen der Formel (2) ausgeht, worin Y Chlor und A ein 1- oder 2-Anthrachinonylrest, der durch Chlor, Brom, Methoxy, Acetyl, Benzoylamino, Phenylamino oder Phenylthio substituiert sein kann, oder ein 3,4-Phthaloylacridonyl-(2)-rest, der durch Chlor oder Trifluormethyl substituiert sein kann, ist.

Eine weitere bevorzugte Ausführungsform des erfindungsgemässen Verfahrens ist dadurch gekennzeichnet, dass man als Acylierungsmittel Benzoylchlorid, das durch Chlor, Brom, Methyl, Methoxy, Nitro oder Carboxy substituiert sein kann,
Naphthoylchlorid,

1-Aminoanthrachinon-
2-carbonsäure-chlorid,
Acetylchlorid,
Chloracetylchlorid,
Bromacetylchlorid,
Propionylchlorid,
Butyrylchlorid oder Nicotinsäurechlorid
und als Amin oder aromatische Hydroxyverbindung $C_1$–$C_4$-Alkylamin, N,N-Di-$C_{1-4}$-Alkylamin, Äthanolamin, N,N-Di-äthanolamin, Anilin, N-Methylanilin, Piperidin, Morpholin oder Phenol verwendet.

Als Acylierungsmittel sowie als Amine und aromatische Hydroxyverbindungen, welche zur Herstellung der Küpenfarbstoffe der Formel (1) nach dem erfindungsgemässen Verfahren verwendet werden können, seien genannt:

Acylierungsmittel, welche den Acylrest X aufweisen:
Acetylchlorid, Acetanhydrid,
Propionsäurechlorid, Propionsäureanhydrid,
Buttersäurechlorid, Acetylbromid,
Acrylsäurechlorid, Acrylsäureanhydrid,
Crotonsäureanhydrid, Chloressigsäurechlorid,
Chloressigsäureanhydrid, β-Chlorpropionsäurechlorid, p-Chlorbuttersäurechlorid,
Benzoylchlorid, Benzoesäureanhydrid,
o-, m- und p-Chlorbenzoylchlorid, Benzoylbromid,
Benzoylfluorid, m- und p-Nitrobenzoylchlorid, p-Hydroxybenzoylchlorid,
p-Phenylbenzoylchlorid, Chlorphenoxyessigsäurechlorid, Phenylessigsäurechlorid,
o-, m- und p-Toluylsäurechlorid,
Naphthalin-1-carbonsäurechlorid,
Naphthalin-2-carbonsäurechlorid,
Naphthalin-1-carbonsäureanhydrid,
Naphthalin-2-carbonsäureanhydrid,
2,3-Hydroxynaphthoesäurechlorid,
2-Hydroxyanthracen-3-carbonsäurechlorid,
Anthrachinon-1-carbonsäurechlorid,
Anthrachinon-2-carbonsäurechlorid,
Anthrachinon-1-carbonsäureanhydrid,
Anthrachinon-2-carbonsäureanhydrid,
1-Aminoanthrachinon-2-carbonsäurechlorid,
Nicotinsäurechlorid,
Isophthalsäurechlorid,
Terephthalsäurechlorid, 4-Methylsulfonylbenzolcarbonsäurechlorid.

Amine und aromatische Hydroxyverbindungen:
Ammoniak, Methylamin, Dimethylamin,
Äthylamin, Diäthylamin, Propylamin,
Isopropylamin, Butylamin, Dibutylamin,
Isobutylamin, sek.-Butylamin,
Tert.-Butylamin, Hexylamin, Methoxyäthylamin,
Äthoxyäthylamin, Methoxypropylamin,
Chloräthylamin, Hydroxyäthylamin,
Dihydroxyäthylamin, Hydroxypropylamin,
Benzylamin, Cyclohexylamin, Anilin, o-,
m- und p-Toluidin, 2,3-, 2,4-, 2,5-, 2,6-, 3,4- und
3,5-Dimethylanilin, o-, m- und p-Chloranilin,
N-Methylanilin, N-Äthylanilin,
3- oder 4-Acetylaminoanilin, o-, m- und
p-Nitroanilin, o-, m- und p-Aminophenol,
2-Methyl-4-nitroanilin, 2-Methyl-5-nitroanilin,
2,5-Dimethoxyanilin, 3-Methyl-4-nitroanilin,
2-Nitro-4-methylanilin, 3-Nitro-4-methylanilin, o-, m- und p-Anisidin, o-, m- und p-Phenetidin, Naphthylamin-(1), Naphthylamin-(2),
Naphthylamin-(2), 2-Amino-1-hydroxynaphthalin,
1-Amino-4-hydroxynaphthalin, 1-Amino-8-hydroxynaphthalin,
1-Amino-2-hydroxynaphthalin, 1-Amino-7-hydroxynaphthalin,
2-, 3- und 4-Aminopyridin, 2-Aminobenzthiazol,
5-, 6- und 8-Aminochinolin, 2-Aminopyrimidin,
Morpholin, Piperidin, Piperazin,
Phenol, o-, m- und p-Chlorphenol, o-, m-
und o-Nitrophenol, 4-Methylphenol,
4-Methoxyphenol, α-Naphthol, β-Naphthol,
6-Nitro-2-naphthol.

Zur Herstellung der Verbindungen der Formel (2) kann man statt eines einheitlichen Diaminoanthrachinons der Formel (5) auch eine Mischung von Diaminoanthrachinonen verwenden, z.B. eine Mischung von 1,5–, 1,6– und 1,7–Diaminoanthrachinon. Insbesondere kommen Gemische von Diaminoanthrachinonen in Betracht, wie sie bei der technischen Darstellung der Diaminoanthrachinone durch Dinitrierung von Anthrachinon und anschliessende Reduktion entstehen. Solche Gemische enthalten z.B. ausser den in überwiegender Menge vorhandenen 1,8-, 1,5-, 1,7- und 1,6-Diaminoanthrachinonen noch geringe Mengen 2,7- und 2,8-Diaminoanthrachinon (β-Isomere) und 1-Aminoanthrachinon, oder sie enthalten ausser 1,6-, 1,8-, 1,7-, 2,6-, 2,7- und 1,5-Diaminoanthrachinon noch geringe Mengen 1-Aminoanthrachinon, 2-Aminoanthrachinon sowie 1-Amino-2-, -4-, -5- und -8-hydroxyanthrachinon.

Die nach dem erfindungsgemässen Verfahren hergestellten Küpenfarbstoffe der Formel (1) eignen sich zum Färben und Bedrucken der verschiedensten Materialien, insbesondere zum Färben und Bedrucken von Fasern aus natürlicher oder regenerierter Cellulose in Gegenwart von Reduktionsmitteln, wie z.B. Dithionit.

Die erhaltenen Färbungen zeichnen sich durch gute Egalitäten aus. Die Echtheiten sind allgemein sehr gut, insbesondere die Licht-, Wasser-, Chlor- und Sodakochechtheiten. Die neuen Farbstoffe reservieren Polyesterfasern gut oder schmutzen sie Ton-in-Ton an, was sie zum Färben von Mischfasern im Gemisch mit Dispersionsfarbstoffen geeignet macht.

Die Farbstoffe können auch als Pigmente für die verschiedensten Pigmentapplikationen eingesetzt werden, z.B. in feinverteilter Form zum Färben von Kunstseide und Viscose oder Celluloseäthern oder -estern oder von Superpolyamiden bzw. Superpolyurethanen oder Polyestern in der Spinnmasse, sowie zur Herstellung von gefärbten Lakken oder Lackbildnern, Lösungen oder Produkten aus Acetylcellulose, Nitrocellulose, natürlichen Harzen oder Kunstharzen, wie Polymerisationsharzen oder Kondensationsharzen, z.B. Aminoplasten, Alkydharzen, Phenoplasten, Polyolefinen, wie Polystyrol, Polyvinylchlorid, Polyäthylen, Polypropylen, Polyacrylnitril, Gummi, Casein, Silikon und Silikonharzen. Ausserdem lassen sie sich vorteilhaft bei der Herstellung von Farbstiften, kosmetischen Präparaten oder Laminierplatten verwenden.

Nach dem konventionellen Verfahren werden asymmetrische Küpenfarbstoffe der Formel (1) durch Kondensation von Cyanurchlorid mit einem verküpbaren Amin und einem bereits monoacylierten Diaminoanthrachinon hergestellt. Demgegenüber weist das Verfahren der vorliegenden Anmeldung einen technischen Vorteil auf, dieser besteht darin, dass eine erheblich höhere Gesamtausbeute erhalten wird als nach dem konventionellen Verfahren, da bei der vorgängigen Monoacylierung eines Diaminoanthrachinons viel Nebenprodukt ensteht.

Die DE-PS 399 485 beschreibt schon ein Verfahren zur Herstellung von Farbstoffen und Farbstoffzwischenprodukten der Anthrachinonreihe durch Acylieren von Kondensationsprodukten aus Cyanurchlorid und Diaminoanthrachinonen. In sämtlichen Beispielen dieser Entgegenhaltung werden jedoch die Kondensationsprodukte zunächst abfiltriert und anschliessend in einem Löungsmittel angeschlämmt und acyliert. Bei Kenntnis dieser Druckschrift wird der Fachmann also von vornherein eine Acylierung ohne vorherige Isolierung des Kondensationsproduktes nicht in Betracht ziehen. Umso überraschender ist es, dass man beim Arbeiten entgegen der Lehre dieser DE-PS 399 485, das heisst ohne die Isolierung des Zwischenproduktes, sehr gute Ausbeuten erzielen kann.

In den nachfolgenden Beispielen bedeuten die Teile, sofern nichts anderes angegeben ist, Gewichtsteile, die Prozente Gewichtsprozente, und die Temperaturen sind in Celsiusgraden angegeben. Gewichtsteile stehen zu Volumteilen wie Gramm zu Milliliter.

Beispiel 1

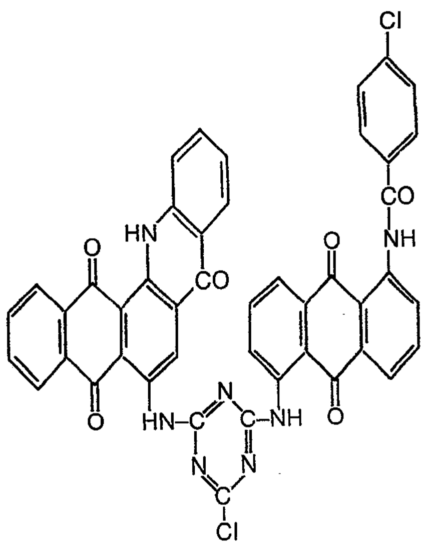

55,5 Teile Cyanurchlorid werden in 1600 Teilen destilliertem Nitrobenzol bei Raumtemperatur gelöst. Dann werden 102 Teile 2-Amino-3,4-phthaloylacridon und 80 Teile Diäthylanilin zugegeben. Die Suspension wird unter Einleiten von Stickstoff 5 Stunden bei 100 bis 105 °C gerührt. Anschliessend werden 71,5 Teile 1,5-Diaminoanthrachinon zugegeben.

Die Reaktionsmischung wird auf 140 bis 145 °C erhitzt und weitere 8 Stunden gerührt. Dann gibt man vorsichtig 60 Teile 4-Chlorbenzoylchlorid und 3 Teile Pyridin zu und rührt bei derselben Temperatur weitere 4 Stunden. Die Reaktionsmischung wird auf Raumtemperatur abkühlengelassen und filtriert.

Das Nutschgut wird mit 300 Teilen Nitrobenzol gewaschen und dann mit Äthanol gewaschen bis der Ablauf kein Nitrobenzol mehr enthält.

Das Nutschgut wird im Vakuumtrockenschrank bei 100 °C über Nacht getrocknet.

Ausbeute: 240 Teile, oliver Farbstoff.

Beispiel 2

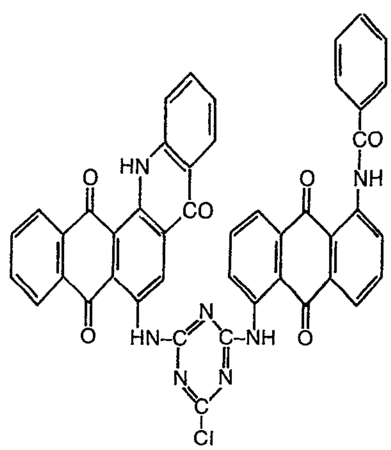

55,5 Teile Cyanurchlorid werden in 1600 Teilen destilliertem Nitrobenzol bei Raumtemperatur gelöst. Dann werden 102 Teile 2-Amino-3,4-phthaloylacridon und 80 Teile Diäthylanilin zugegeben. Die Suspension wird unter Einleiten von Stickstoff 5 Stunden bei 100 bis 105 °C gerührt. Anschliessend werden 71,5 Teile 1,5-Diaminoanthrachinon zugegeben.

Die Reaktionsmischung wird auf 140 bis 145 °C erhitzt und weitere 8 Stunden gerührt. Dann gibt man vorsichtig 60 Teile Benzoylchlorid und 3 Teile Pyridin zu und rührt bei derselben Temperatur weitere 4 Stunden. Die Reaktionsmischung wird auf Raumtemperatur abkühlengelassen und filtriert.

Das Nutschgut wird mit 300 Teilen Nitrobenzol gewaschen und dann mit Äthanol gewaschen bis der Ablauf kein Nitrobenzol mehr enthält.

Das Nutschgut wird im Vakuumtrockenschrank bei 100 °C über Nacht getrocknet.

Ausbeute: 227 Teile, oliver Farbstoff.

Beispiel 3

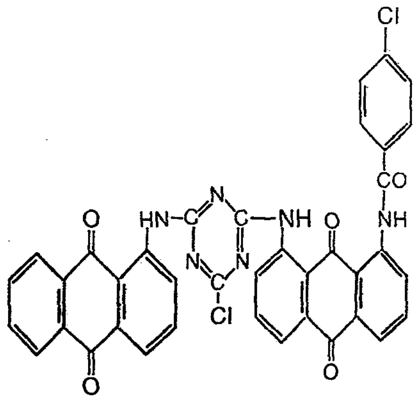

18,5 Teile Cyanurchlorid werden in 500 Teilen destilliertem Nitrobenzol bei Raumtemperatur gelöst. Dann werden 22,3 Teile 1-Aminoanthrachinon und 25 Teile Diäthylanilin zugegeben. Die Suspension wird unter Einleiten von Stickstoff 5 Stunden bei 100 bis 105 °C gerührt. Anschliessend werden 23,8 Teile 1,8-Diaminoanthrachinon zugegeben.

Die Reaktionsmischung wird auf 140 bis 145 °C erhitzt und weitere 8 Stunden gerührt.

Dann gibt man vorsichtig 18 Teile 4-Chlorbenzoylchlorid und 1 Teil Pyridin zu und rührt bei derselben Temperatur weitere 4 Stunden. Die Reaktionsmischung wird auf Raumtemperatur abkühlengelassen und filtriert.

Das Nutschgut wird mit 100 Teilen Nitrobenzol gewaschen und dann mit Äthanol gewaschen bis der Ablauf kein Nitrobenzol mehr enthält.

Das Nutschgut wird im Vakuumtrockenschrank bei 100 °C über Nacht getrocknet.

Ausbeute: 66 Teile, gelber Farbstoff.

Beispiel 4

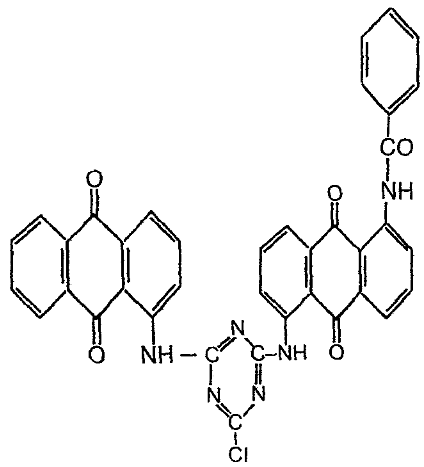

18,5 Teile Cyanurchlorid werden in 500 Teilen destilliertem Nitrobenzol bei Raumtemperatur gelöst. Dann werden 22,3 Teile 1-Aminoanthrachinon und 25 Teile Diäthylanilin zugegeben. Die Suspension wird unter Einleiten von Stickstoff 5 Stunden bei 100 bis 105 °C gerührt. Anschliessend werden 23,8 Teile 1,5-Diaminoanthrachinon zugegeben.

Die Reaktionsmischung wird auf 140 bis 145 °C erhitzt und weitere 8 Stunden gerührt.

Dann gibt man vorsichtig 17 Teile Benzoylchlorid und 1 Teil Pyridin zu und rührt bei derselben Temperatur weitere 4 Stunden. Die Reaktionsmischung wird auf Raumtemperatur abkühlengelassen und filtriert.

Das Nutschgut wird mit 100 Teilen Nitrobenzol gewaschen und dann mit Äthanol gewaschen bis der Ablauf kein Nitrobenzol mehr enthält.

Das Nutschgut wird im Vakuumtrockenschrank bei 100 °C über Nacht getrocknet.

Ausbeute: 64 Teile, gelber Farbstoff.

Verwendet man in den oben gegebenen Ausführungsbeispielen statt 500 Teilen Nitrobenzol die gleiche Menge o-Dichlorbenzol oder Trichlorbenzol, so erhält man das gleiche Endprodukt in gleich hoher Ausbeute.

Beispiel 5

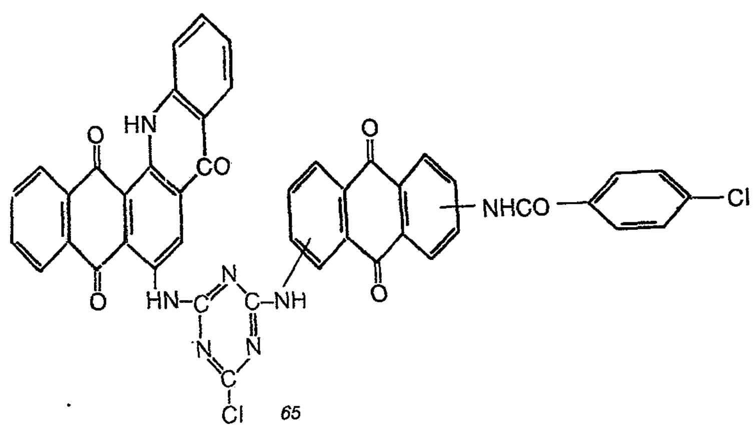

55,5 Teile Cyanurchlorid werden in 1600 Teilen destilliertem Nitrobenzol bei Raumtemperatur gelöst. Dann werden 102 Teile 2-Amino-3,4-phthaloylacridon und 80 Teile Diäthylanilin zugegeben. Die Suspension wird unter Einleiten von Stickstoff 5 Stunden bei 100 bis 105 °C gerührt. Anschliessend werden 71,5 Teile einer Mischung von 37 Teilen 1,6-Diaminoanthrachinon, 23 Teilen 1,8-Diaminoanthrachinon, 16,6 Teilen 1,7-Diaminoanthrachinon, 6,4 Teilen 1,5-Diaminoanthrachinon, 2,4 Teilen 2,6--Diaminoanthrachinon, 2,6 Teilen 2,7-Diaminoanthrachinon, 1,4 Teilen 1-Aminoanthrachinon, 0,6 Teilen 2-Aminoanthrachinon und 5,2 Teilen Amino-hydroxyanthrachinon zugegeben. Die Reaktionsmischung wird auf 140 bis 145 °C erhitzt und weitere 8 Stunden gerührt.

Dann gibt man vorsichtig 60 Teile 4-Chlorbenzoylchlorid und 3 Teile Pyridin zu und rührt bei derselben Temperatur weitere 4 Stunden. Die Reaktionsmischung wird auf Raumtemperatur abkühlengelassen und filtriert.

Das Nutschgut wird mit 300 Teilen Nitrobenzol gewaschen und dann mit Äthanol gewaschen bis der Ablauf kein Nitrobenzol mehr enthält.

Das Nutschgut wird im Vakuumtrockenschrank bei 100 °C über Nacht getrocknet.

Ausbeute: 218 Teile, oliver Farbstoff.

Beispiel 6

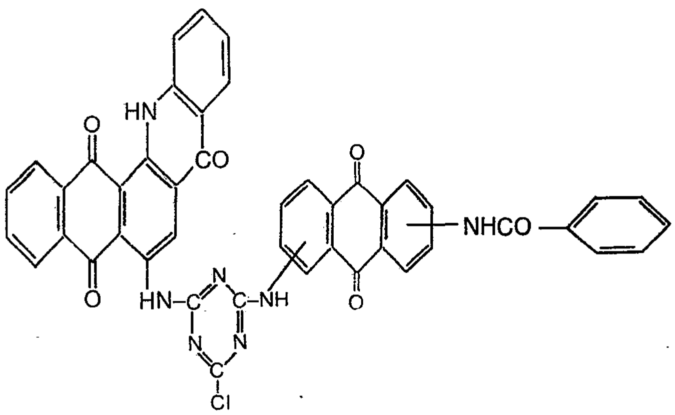

55,5 Teile Cyanurchlorid werden in 1600 Teilen destilliertem Nitrobenzol bei Raumtemperatur gelöst. Dann werden 102 Teile 2-Amino-3,4-phthaloylacridon und 80 Teile Diäthylanilin zugegeben. Die Suspension wird unter Einleiten von Stickstoff 5 Stunden bei 100 bis 105 °C gerührt. Anschliessend werden 71,5 Teile einer Mischung von 62 Teilen 1,8-Diaminoanthrachinon, 1,42 Teilen 1,5-Diaminoanthrachinon, 14 Teilen 1,7-Diaminoanthrachinon, 3,28 Teilen 1,6-Diaminoanthrachinon, 0,76 Teilen β-Isomere und 0,56 Teilen 1-Aminoanthrachinon zugegeben. Die Reaktionsmischung wird auf 140 bis 145 °C erhitzt und weitere 8 Stunden gerührt.

Dann gibt man vorsichtig 60 Teile Benzoylchlorid und 3 Teile Pyridin zu und rührt bei derselben Temperatur weitere 4 Stunden. Die Reaktionsmischung wird auf Raumtemperatur abkühlengelassen und filtriert.

Das Nutschgut wird mit 300 Teilen Nitrobenzol gewaschen und dann mit Äthanol gewaschen bis der Ablauf kein Nitrobenzol mehr enthält.

Das Nutschgut wird im Vakuumtrockenschrank bei 100 °C über Nacht getrocknet.

Ausbeute: 215 Teile, oliver Farbstoff.

Beispiel 7

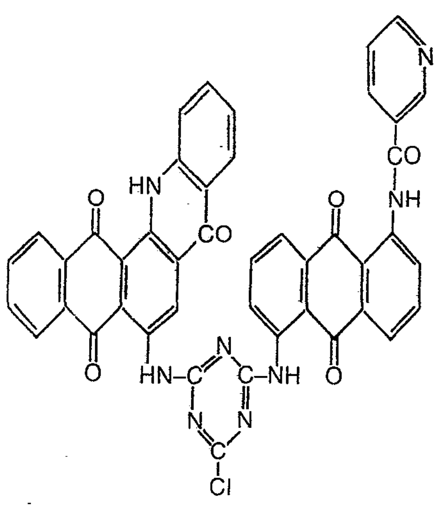

55,5 Teile Cyanurchlorid werden in 1600 Teilen destilliertem Nitrobenzol bei Raumtemperatur gelöst. Dann werden 102 Teile 2-Amino-3,4-phthaloylacridon und 80 Teile Diäthylanilin zugegeben. Die Suspension wird unter Einleiten von Stickstoff 5 Stunden bei 100 bis 105 °C gerührt. Anschliessend werden 71,5 Teile 1,5-Diaminoanthrachinon zugegeben. Die Reaktionsmischung wird auf 140 bis 145 °C erhitzt und weitere 8 Stunden gerührt.

Dann gibt man vorsichtig 60 Teile Nicotinsäurechlorid und 3 Teile Pyridin zu und rührt bei derselben Temperatur weitere 4 Stunden. Die Reaktionsmischung wird auf Raumtemperatur abkühlengelassen und filtriert.

Das Nutschgut wird mit 300 Teilen Nitrobenzol gewaschen und dann mit Äthanol gewaschen bis der Ablauf kein Nitrobenzol mehr enthält.

Das Nutschgut wird im Vakuumtrockenschrank bei 100 °C über Nacht getrocknet.

Ausbeute: 220 Teile, oliver Farbstoff.

Nach der gleichen Verfahrensweise, wie sie in den Beispielen 1 bis 7 beschrieben ist, werden die in der folgenden Tabelle I aufgeführten Küpenfarbstoffe der Formel

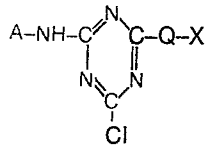

hergestellt. Die Gruppen A, Q und X in Tabelle I haben die gleiche Bedeutung wie in der oben angegebenen Formel.

Tabelle I

| No. | A | Q | X | Nuance auf Baumwolle |
|---|---|---|---|---|
| 8 | 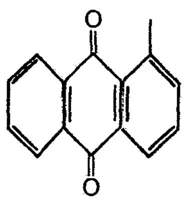 | 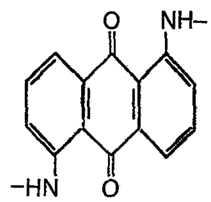 | 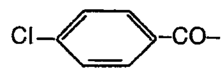 | gelb |
| 9 | " | " | 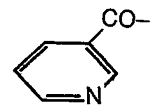 | " |
| 10 | " | " | 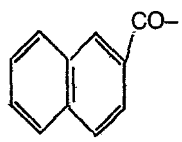 | " |
| 11 | " | " | 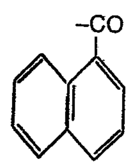 | " |
| 12 | " | " | 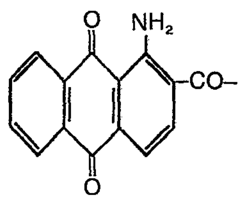 | orange |
| 13 | " | " | 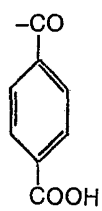 | gelb |
| 14 | " | " | 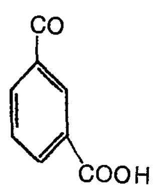 | " |

Tabelle I (Fortsetzung)

| No. | A | Q | X | Nuance auf Baumwolle |
|---|---|---|---|---|
| 15 | 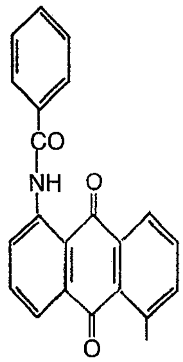 | 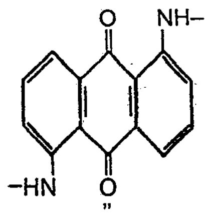 | 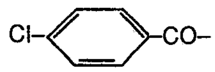 | gelb |
| 16 | " | " | 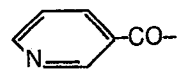 | " |
| 17 | " | " | 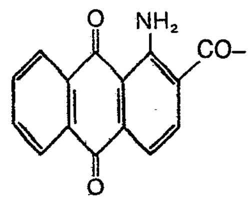 | orange |
| 18 | 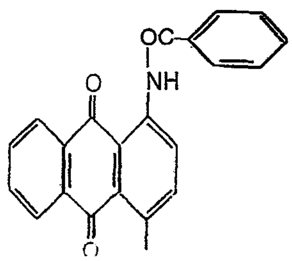 | " | 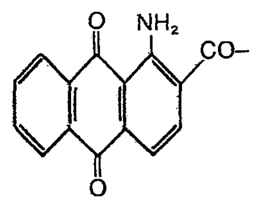 | rot |
| 19 | " | " | 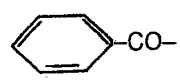 | orange (rotstichig) |
| 20 | " | " | 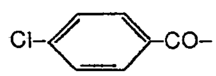 | " |
| 21 | " | " | 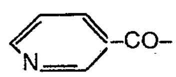 | " |
| 22 | " | " | 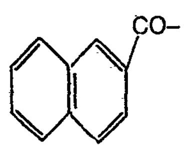 | orange (rotstichig) |
| 23 | " | " | 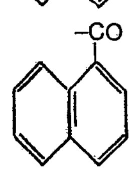 | " |
| 24 | 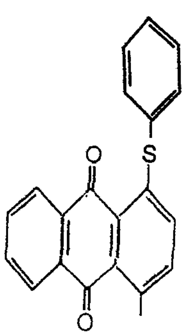 | " | 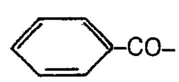 | " |

Tabelle I (Fortsetzung)

| No. | A | Q | X | Nuance auf Baumwolle |
|---|---|---|---|---|
| 25 | 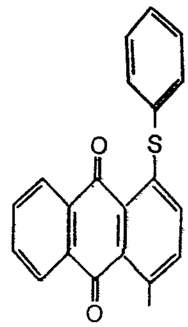 | 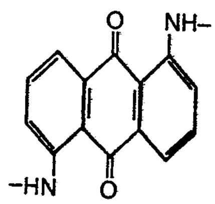 | 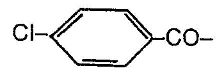 | orange (rotstichig) |
| 26 | 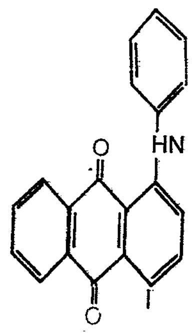 | " | 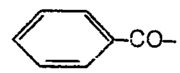 | olive |
| 27 | " | " | 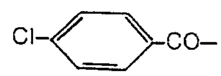 | " |
| 28 | 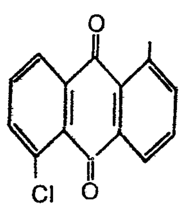 | " | 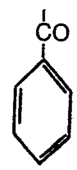 | gelb |
| 29 | " | " | 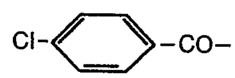 | " |
| 30 | 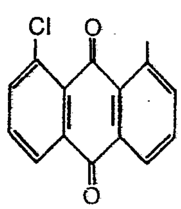 | " | 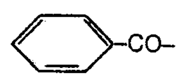 | " |
| 31 | " | " | 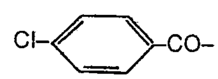 | " |
| 32 | 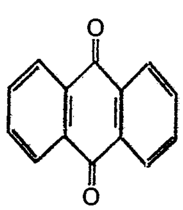 | " | 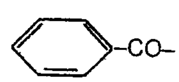 | " |
| 33 | " | " | 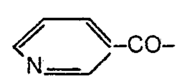 | " |
| 34 | " | " | 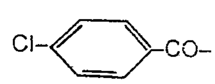 | " |

Tabelle I (Fortsetzung)

| No. | A | Q | X | Nuance auf Baumwolle |
|---|---|---|---|---|
| 35 | 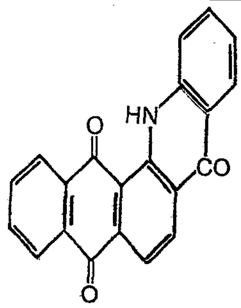 | 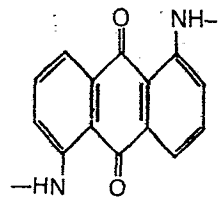 | 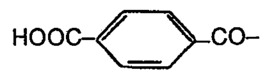 | olive |
| 36 | " | " | 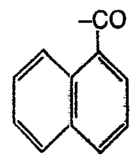 | " |
| 37 | " | " | 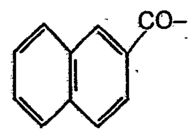 | " |
| 38 | 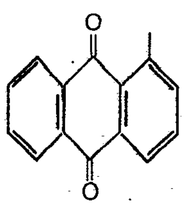 | 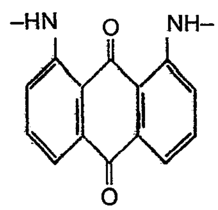 | 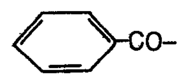 | gelb |
| 39 | " | " | 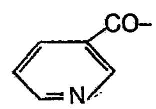 | " |
| 40 | " | " | 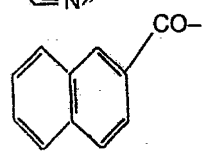 | " |
| 41 | " | " | 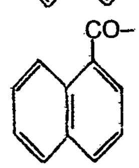 | " |
| 42 | " | " | 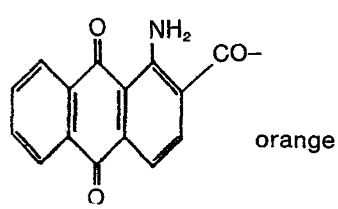 | orange |
| 43 | " | " | 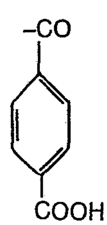 | gelb |

Tabelle I (Fortsetzung)

| No. | A | Q | X | Nuance auf Baumwolle |
|---|---|---|---|---|
| 44 | 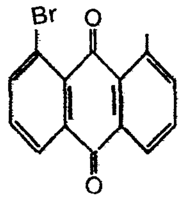 | 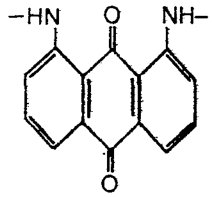 | 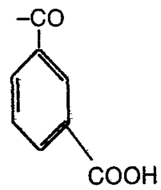 | gelb |
| 45 | 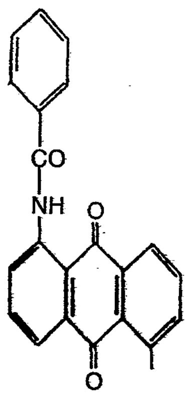 | " | 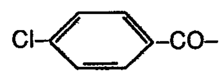 | " |
| 46 | " | " | 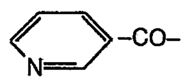 | " |
| 47 | " | " | 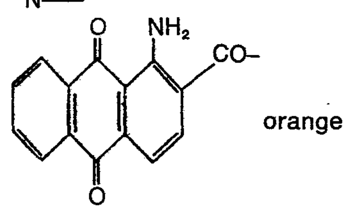 | orange |
| 48 | 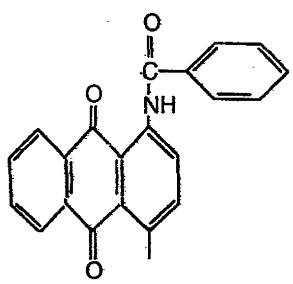 | " | " | rot |
| 49 | " | " | 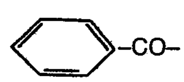 | orange (rotstichig) |
| 50 | " | " | 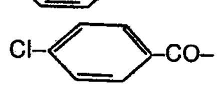 | " |
| 51 | " | " | 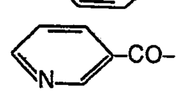 | " |
| 52 | " | " | 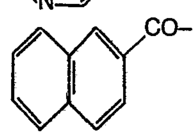 | " |
| 53 | " | " | 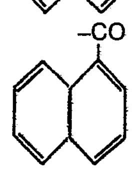 | " |

Tabelle I (Fortsetzung)

| No. | A | Q | X | Nuance auf Baumwolle |
|---|---|---|---|---|
| 54 | 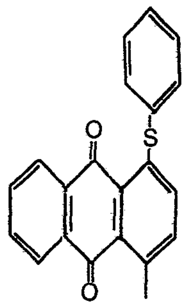 | 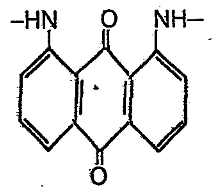 | 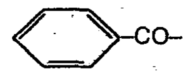 | orange (rotstichig) |
| 55 | " | " | 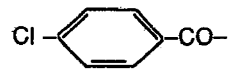 | " |
| 56 | 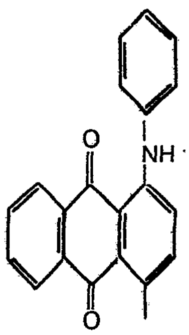 | " | 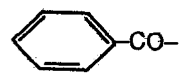 | olive |
| 57 | " | " | 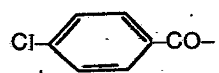 | " |
| 58 | 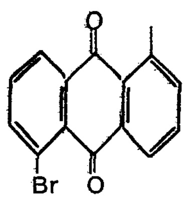 | " | 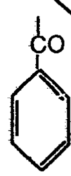 | gelb |
| 59 | " | " | 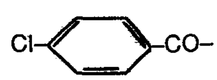 | " |
| 60 | 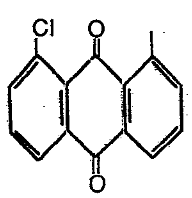 | " | 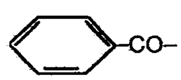 | " |
| 61 | " | " | 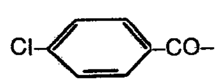 | " |
| 62 | 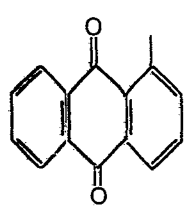 | " | 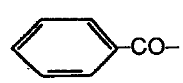 | " |
| 63 | " | " | 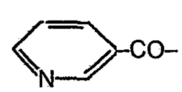 | " |
| 64 | " | " | 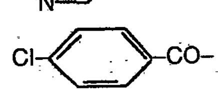 | " |

Tabelle I (Fortsetzung)

| No. | A | Q | X | Nuance auf Baumwolle |
|---|---|---|---|---|
| 65 | 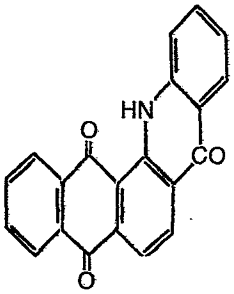 | 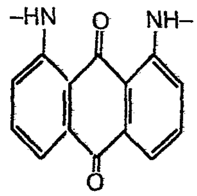 | 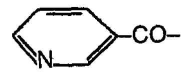 | olive |
| 66 | " | " | 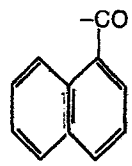 | " |
| 67 | " | " | 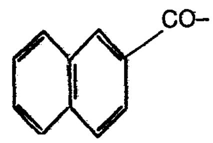 | " |
| 68 | 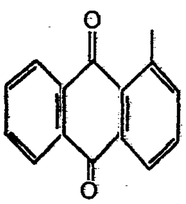 | 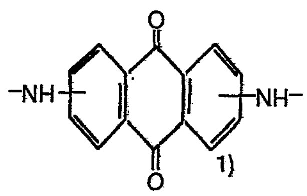 1) | 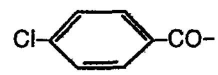 | gelb |
| 69 | " | " | 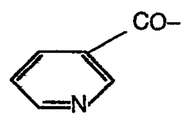 | " |
| 70 | " | " | 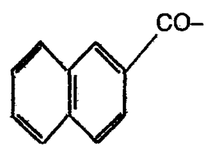 | " |
| 71 | " | " | 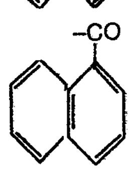 | " |
| 72 | " | " | 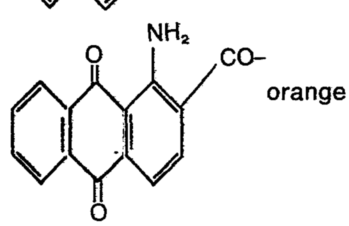 | orange |
| 73 | " | " | 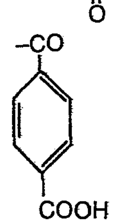 | gelb |

1) eine Mischung von 31,2 Teilen 1,8-Diaminoanthrachinon, 7,1 Teilen 1,5-Diaminoanthrachinon, 7,0 Teilen 1,7-Diaminoanthrachinon, 1,64 Teilen 1,6-Diaminoanthrachinon, 0,38 Teilen β-Isomere und 0,28 Teilen 1-Aminoanthrachinon.

Tabelle I (Fortsetzung)

| No. | A | Q | X | Nuance auf Baumwolle |
|---|---|---|---|---|
| 74 | 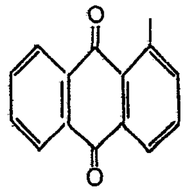 | 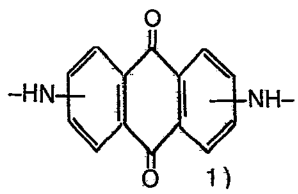 1) | 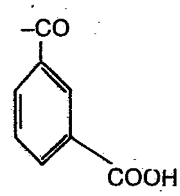 | gelb |
| 75 | 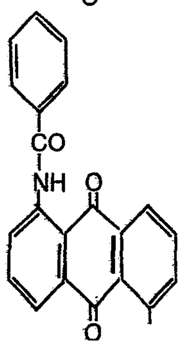 | " | 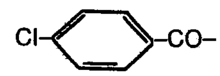 | |
| 76 | " | " | 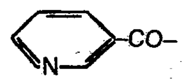 | " |
| 77 | " | " | 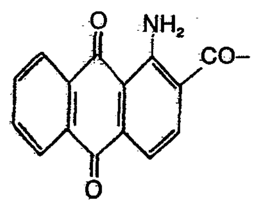 | orange |
| 78 | 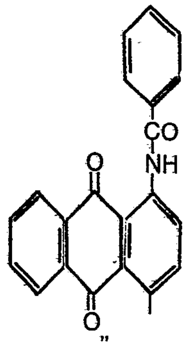 | " | " | rot |
| 79 | " | " | 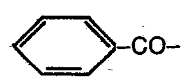 | orange (rotstichig) |
| 80 | " | " | 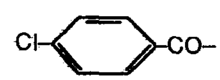 | " |
| 81 | " | " | 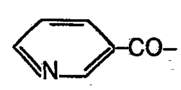 | " |
| 82 | " | " | 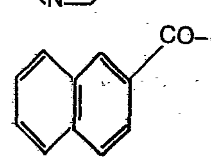 | " |
| 83 | " | " | 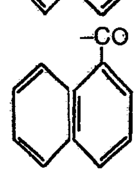 | " |

Tabelle I (Fortsetzung)

| No. | A | Q | X | Nuance auf Baumwolle |
|---|---|---|---|---|
| 84 | 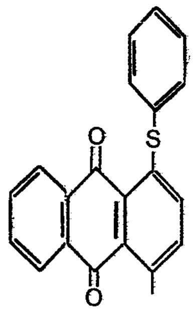 | 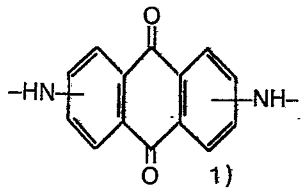 1) | 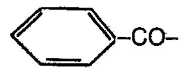 | orange (rotstichig) |
| 85 | " | " | 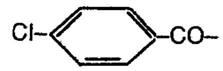 | " |
| 86 | 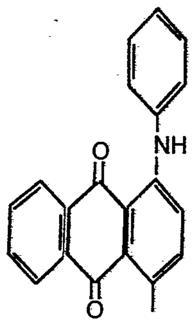 | " | 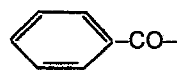 | olive |
| 87 | " | " | 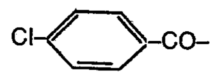 | " |
| 88 | 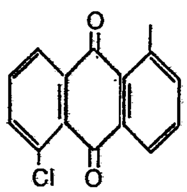 | " | 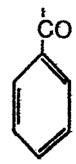 | gelb |
| 89 | " | " | 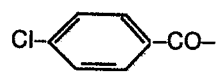 | " |
| 90 | 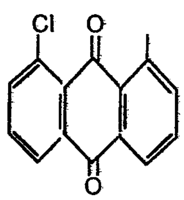 | " | 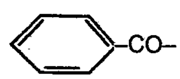 | " |
| 91 | " | " | 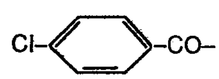 | " |
| 92 | 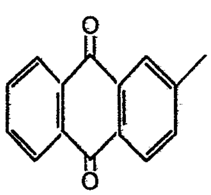 | " | 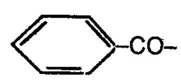 | " |
| 93 | " | " | 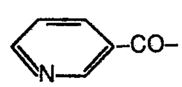 | " |
| 94 | " | " | 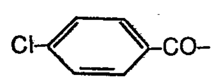 | " |

Tabelle I (Fortsetzung)

| No. | A | Q | X | Nuance auf Baumwolle |
|---|---|---|---|---|
| 95 | 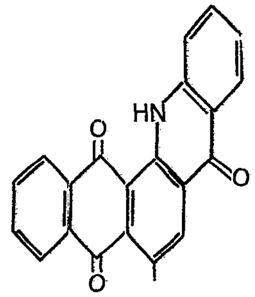 | 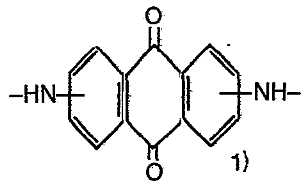 1) | 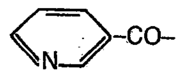 | olive |
| 96 | " | " | 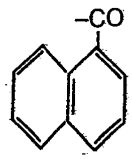 | " |
| 97 | " | " | 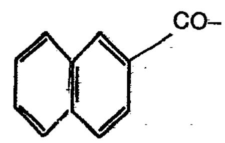 | " |
| 98 | 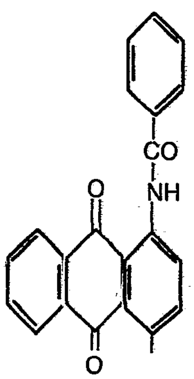 | 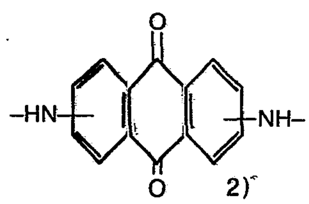 2) | 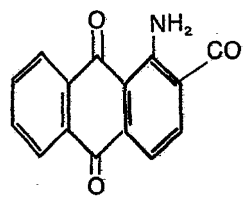 | rot |
| 99 | " | " | 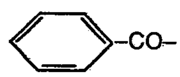 | orange (rotstichig) |
| 100 | " | " | 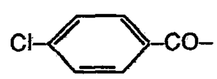 | " |
| 101 | " | " | 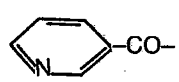 | " |
| 102 | " | " | 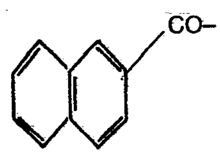 | orange (rotstichig) |
| 103 | " | " | 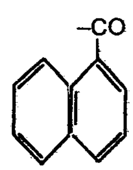 | " |

2) eine Mischung von 18,5 Teilen 1,6-Diaminoanthrachinon, 11,5 Teilen 1,8-Diaminoanthrachinon, 8,3 Teilen 1,7-Diaminoanthrachinon, 3,2 Teilen 1,5-Diaminoanthrachinon, 1,2 Teilen 2,6-Diaminoanthrachinon, 1,3 Teilen 2,7-Diaminoanthrachinon, 0,7 Teilen 1-Aminoanthrachinon, 0,3 Teilen 2-Aminoanthrachinon und 2,6 Teilen Amino-hydroxy-anthrachinon.

Tabelle I (Fortsetzung)

| No. | A | Q | X | Nuance auf Baumwolle |
|---|---|---|---|---|
| 104 | 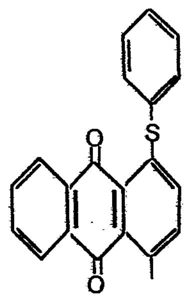 | 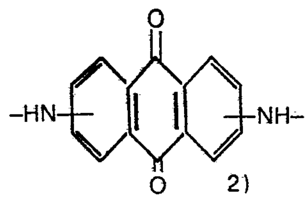 2) | 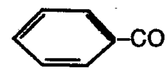 | orange (rotstichig) |
| 105 | " | " | 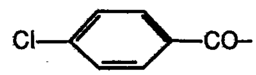 | " |
| 106 | 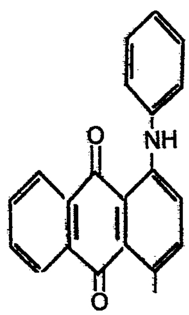 | " | 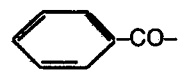 | olive |
| 107 | " | " | 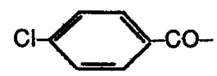 | " |
| 108 | 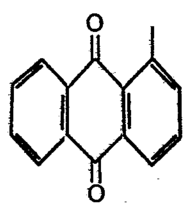 | " | 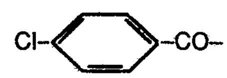 | gelb |
| 109 | " | " | 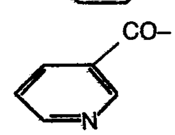 | " |
| 110 | " | " | 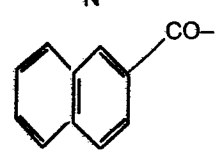 | " |
| 111 | " | " | 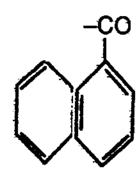 | " |
| 112 | " | " | 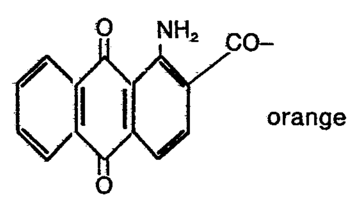 | orange |
| 113 | " | " | 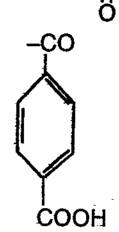 | gelb |

Tabelle I (Fortsetzung)

| No. | A | Q | X | Nuance auf Baumwolle |
|---|---|---|---|---|
| 114 | 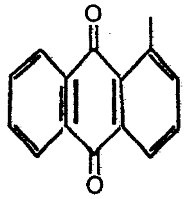 | 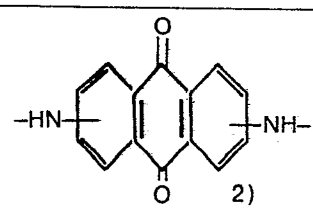 2) | 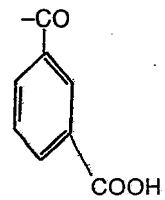 | gelb |
| 115 | 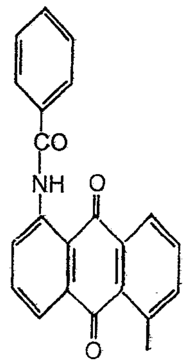 | " | 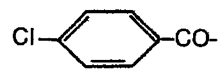 | " |
| 116 | " | " | 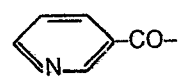 | " |
| 117 | " | " | 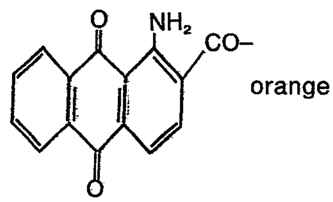 | orange |
| 118 | 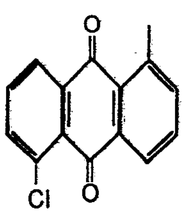 | " | 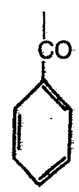 | gelb |
| 119 | " | " | 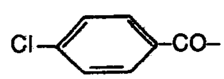 | " |
| 120 | 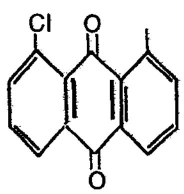 | " | 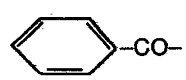 | |
| 121 | " | " | 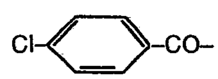 | " |
| 122 | 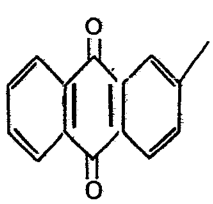 | " | 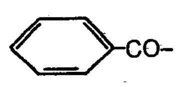 | " |
| 123 | | " | 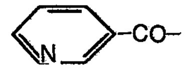 | " |

Tabelle I (Fortsetzung)

| No. | A | Q | X | Nuance auf Baumwolle |
|---|---|---|---|---|
| 124 | 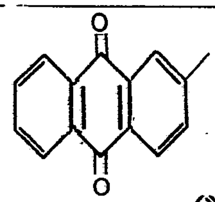 | 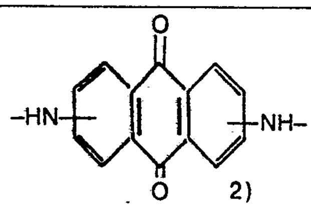 2) | 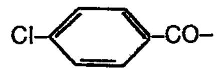 | gelb |
| 125 | 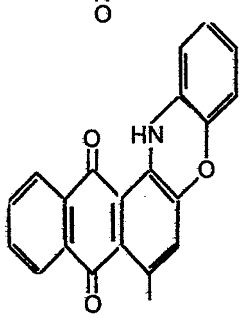 | " | 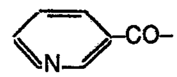 | olive |
| 126 | " | " | 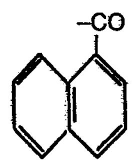 | " |
| 127 | " | " | 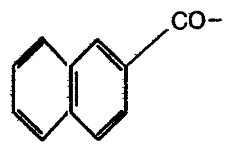 | " |
| 128 | " | " | 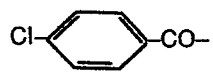 | " |
| 129 | 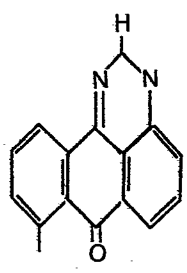 | 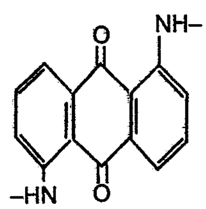 | 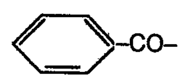 | gelb |
| 130 | " | " | $ClCH_2$–CO– | " |
| 131 | 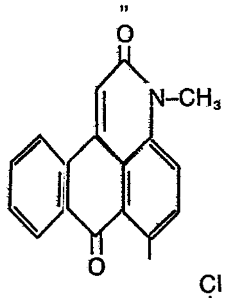 | " | 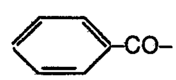 | " |
| 132 | 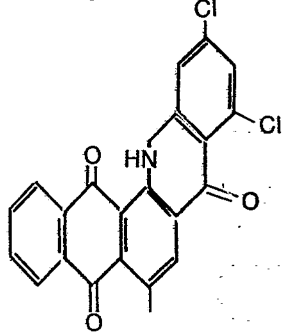 | " | " | olive |

Tabelle I (Fortsetzung)

| No. | A | Q | X | Nuance auf Baumwolle |
|---|---|---|---|---|
| 133 | 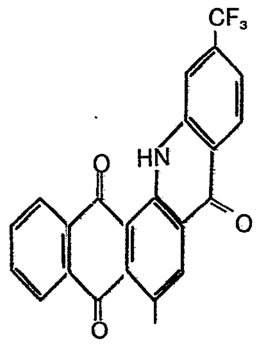 | 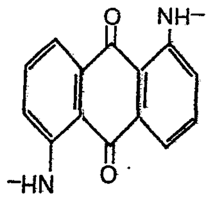 | $CH_3CH_2CH_2$–CO– | olive |
| 134 | 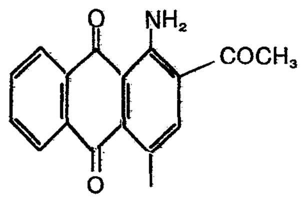 | " | 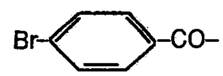 | " |
| 135 | | " | 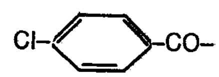 | " |
| 136 | 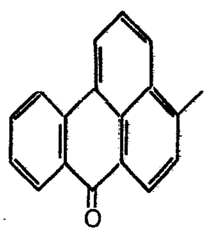 | " | 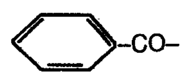 | gelb |
| 137 | 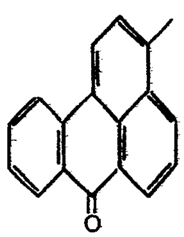 | " | " | " |
| 138 | 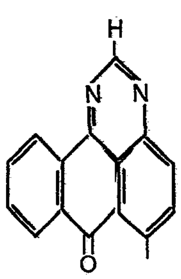 | 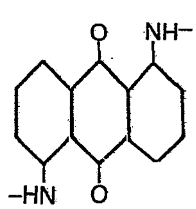 | $BrCH_2$–CO– | " |
| 139 | 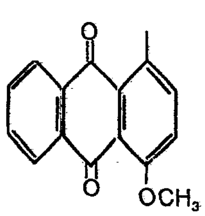 | " | 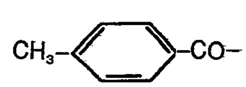 | orange |

Tabelle I (Fortsetzung)

| No. | A | Q | X | Nuance auf Baumwolle |
|---|---|---|---|---|
| 140 | 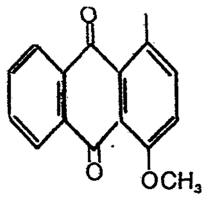 | 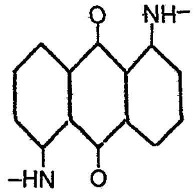 | $CH_3$–CO– | orange |
| 141 | 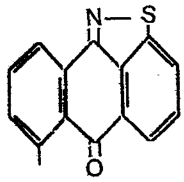 | " | 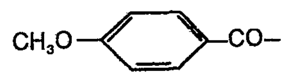 | " |
| 142 | | " | 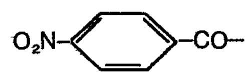 | " |
| | | | $CH_3CH_2$–CO– | |
| 143 | " | " | $CH_3CH_2$–CO– | " |

Beispiel 144

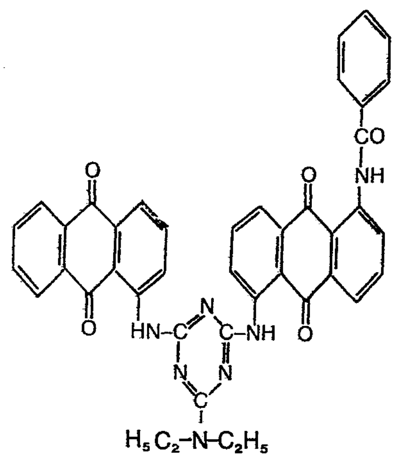

a) 18,5 Teile Cyanurchlorid werden in 500 Teilen destilliertem Nitrobenzol bei Raumtemperatur gelöst. Dann werden 22,3 Teile 1-Aminoanthrachinon und 25 Teile Diäthylanilin zugegeben. Die Suspension wird unter Einleiten von Stickstoff 5 Stunden bei 100 bis 105 °C gerührt. Anschliessend werden 23,8 Teile 1,5-Diaminoanthrachinon zugegeben. Die Reaktionsmischung wird auf 140 bis 145 °C erhitzt und weitere 8 Stunden gerührt.

Dann wird auf Raumtemperatur abkühlengelassen und 25 Teile Diäthylamin zugegeben und bei 120 bis 125 °C 5 Stunden verrührt und dann nach Entfernung von überschüssigem Diäthylamin gibt man vorsichtig 20 Teile Benzoylchlorid und 1 Teil Pyridin zu und rührt 4 Stunden bei 140 bis 145 °C. Die Reaktionsmischung wird auf Raumtemperatur abkühlengelassen und filtriert. Das Nutschgut wird mit 100 Teilen Nitrobenzol gewaschen und dann mit Äthanol gewaschen bis der Ablauf kein Nitrobenzol mehr enthält. Das Nutschgut wird im Vakuumtrockenschrank bei 100 °C über Nacht getrocknet.

Ausbeute: 60 Teile, gold-oranger Farbstoff.

b) 18,5 Teile Cyanurchlorid werden in 500 Teilen destilliertem Nitrobenzol bei Raumtemperatur gelöst. Dann werden 22,3 Teile 1-Aminoanthrachinon und 25 Teile Diäthylanilin zugegeben. Die Suspension wird unter Einleiten von Stickstoff 5 Stunden bei 100 bis 105 °C gerührt. Anschliessend werden 23,8 Teile 1,5-Diaminoanthrachinon zugegeben. Die Reaktionsmischung wird auf 140 bis

145 °C erhitzt und weitere 8 Stunden gerührt. Dann gibt man vorsichtig 18 Teile Benzoylchlorid und 1 Teil Pyridin zu und rührt bei derselben Temperatur weitere 4 Stunden. Nun wird auf Raumtemperatur abkühlengelassen und 30 Teile Diäthylamin zugegeben und bei 120 bis 125 °C 5 Stunden verrührt.

Die Reaktionsmischung wird auf Raumtemperatur abkühlengelassen und filtriert. Das Nutschgut wird mit 100 Teilen Nitrobenzol und dann mit Äthanol gewaschen bis der Ablauf kein Nitrobenzol mehr enthält. Das Nutschgut wird im Vakuumtrockenschrank bei 100 °C über Nacht getrocknet.

Ausbeute: 59 Teile, goldoranger Farbstoff.

Beispiel 145

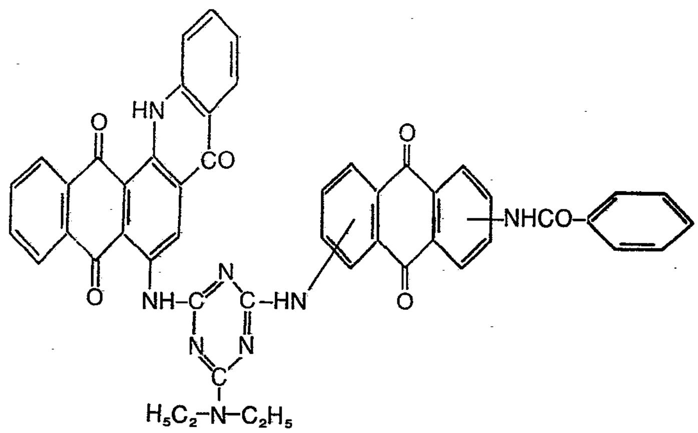

a) 55,5 Teile Cyanurchlorid werden in 1600 Teilen destilliertem Nitrobenzol bei Raumtemperatur gelöst. Dann werden 102 Teile 2-Amino-3,4-phthaloylacridon und 80 Teile Diäthylanilin zugegeben. Die Suspension wird unter Einleiten von Stickstoff 5 Stunden bei 100 bis 105 °C gerührt. Anschliessend werden 71,5 Teile einer Mischung von 62 Teilen 1,8-Diaminoanthrachinon, 1,42 Teilen 1,5-Diaminoanthrachinon, 14 Teilen 1,7-Diaminoanthrachinon, 3,28 Teilen 1,6-Diaminoanthrachinon, 0,76 Teilen β-Isomere und 0,56 Teilen 1-Aminoanthrachinon zugegeben. Die Reaktionsmischung wird auf 140 bis 145 °C erhitzt und weitere 8 Stunden gerührt. Dann wird auf Raumtemperatur abkühlengelassen und 80 Teile Diäthylamin zugegeben und bei 120 bis 125 °C 5 Stunden verrührt und dann nach Entfernung von überschüssigem Diäthylamin gibt man vorsichtig 65 Teile Benzoylchlorid und 3 Teile Pyridin zu und rührt 4 Stunden bei 140 bis 145 °C.

Die Reaktionsmischung wird auf Raumtemperatur abkühlengelassen und filtriert. Das Nutschgut wird mit 300 Teilen Nitrobenzol gewaschen und dann mit Äthanol gewaschen bis der Ablauf kein Nitrobenzol mehr enthält. Das Nutschgut wird im Vakuumtrockenschrank bei 100 °C über Nacht getrocknet.

Ausbeute: 210 Teile, oliver Farbstoff.

b) 55,5 Teile Cyanurchlorid werden in 1600 Teilen destilliertem Nitrobenzol bei Raumtemperatur gelöst. Dann werden 102 Teile 2-Amino-3,4-phthaloylacridon und 80 Teile Diäthylanilin zugegeben. Die Suspension wird unter Einleiten von Stickstoff 5 Stunden bei 100 bis 105 °C gerührt. Anschliessend werden 71,5 Teile einer Mischung von 62 Teilen 1,8-Diaminoanthrachinon, 1,42 Teilen 1,5-Diaminoanthrachinon, 14 Teilen 1,7-Diaminoanthrachinon, 3,28 Teilen 1,6-Diaminoanthrachinon, 0,76 Teilen β-Isomere und 0,56 Teilen 1-Aminoanthrachinon zugegeben. Die Reaktionsmischung wird auf 140 bis 145 °C erhitzt und weitere 8 Stunden gerührt. Dann gibt man vorsichtig 52 Teile Benzoylchlorid und 3 Teile Pyridin zu und rührt bei derselben Temperatur weitere 4 Stunden. Nun wird auf Raumtemperatur abkühlengelassen und 90 Teile Diäthylamin zugegeben und bei 120 bis 125 °C 5 Stunden verrührt.

Die Reaktionsmischung wird auf Raumtemperatur abkühlengelassen und filtriert. Das Nutschgut wird mit 300 Teilen Nitrobenzol und dann mit Äthanol gewaschen bis der Ablauf kein Nitrobenzol mehr enthält. Das Nutschgut wird im Vakuumtrockenschrank bei 100 °C über Nacht getrocknet.

Ausbeute: 210 Teile, oliver Farbstoff.

Beispiel 146

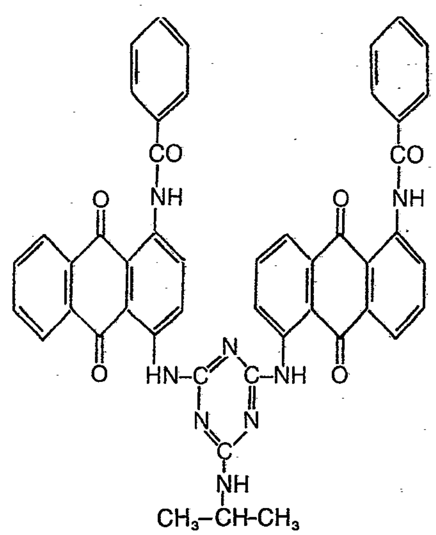

a) 55,5 Teile Cyanurchlorid werden in 1600 Teilen destilliertem Nitrobenzol bei Raumtemperatur gelöst. Dann werden 102,6 Teile 1-Amino-4-benzoylamino-anthrachinon und 80 Teile Diäthylanilin zugegeben. Die Suspension wird unter Einleiten von Stickstoff 5 Stunden bei 100 bis 105 °C gerührt. Anschliessend werden 71,5 Teile 1,5-Diaminoanthrachinon zugegeben. Die Reaktionsmischung wird auf 140 bis 145 °C erhitzt und weitere 8 Stunden gerührt. Dann wird auf Raumtemperatur abkühlengelassen und 80 Teile Isopropylamin zugegeben und bei 120 bis 125 °C 5 Stunden verrührt und dann nach Entfernung von überschüssigem Isopropylamin gibt man vorsichtig 65 Teile Benzoylchlorid und 3 Teile Pyridin zu und rührt 4 Stunden bei 140 bis 145 °C.

Die Reaktionsmischung wird auf Raumtemperatur abkühlengelassen und filtriert. Das Nutschgut wird mit 300 Teilen Nitrobenzol gewaschen und dann mit Äthanol gewaschen bis der Ablauf kein Nitrobenzol mehr enthält. Das Nutschgut wird im Vakuumtrockenschrank bei 100 °C über Nacht getrocknet.

Ausbeute: 205 Teile, braunroter Farbstoff.

b) 55,5 Teile Cyanurchlorid werden in 1600 Teilen destilliertem Nitrobenzol bei Raumtemperatur gelöst. Dann werden 102,6 Teile 1-Amino-4-benzoylamino-anthrachinon und 80 Teile Diäthylanilin zugegeben. Die Suspension wird unter Einleiten von Stickstoff 5 Stunden bei 100 bis 105 °C gerührt. Anschliessend werden 71,5 Teile 1,5-Diaminoanthrachinon zugegeben. Die Reaktionsmischung wird auf 140 bis 145 °C erhitzt und weitere 8 Stunden gerührt. Dann gibt man vorsichtig 52 Teile Benzoylchlorid und 3 Teile Pyridin zu und rührt bei derselben Temperatur weitere 4 Stunden. Nun wird auf Raumtemperatur abkühlengelassen und 90 Teile Isopropylamin zugegeben und bei 120 bis 125 °C 5 Stunden verrührt. Die Reaktionsmischung wird auf Raumtemperatur abkühlengelassen und filtriert.

Das Nutschgut wird mit 300 Teilen Nitrobenzol und dann mit Äthanol gewaschen bis der Ablauf kein Nitrobenzol mehr enthält. Das Nutschgut wird im Vakuumtrockenschrank bei 100 °C über Nacht getrocknet.

Ausbeute: 204 Teile, braunroter Farbstoff.

Beispiel 147

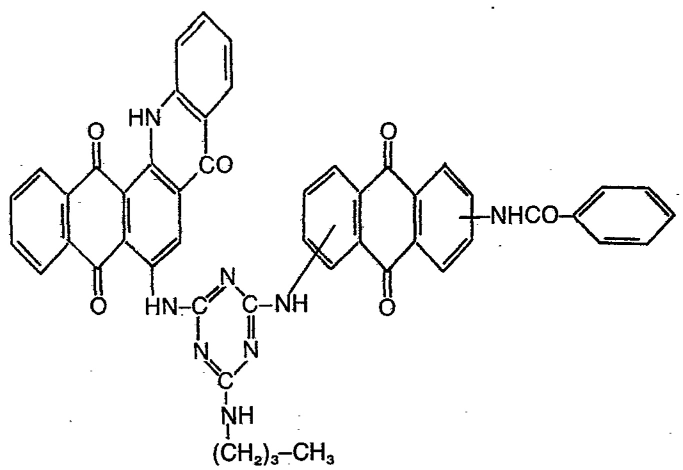

a) 55,5 Teile Cyanurchlorid werden in 1600 Teilen destilliertem Nitrobenzol bei Raumtemperatur gelöst. Dann werden 102 Teile 2-Amino-3,4-phthaloylacridon und 80 Teile Diäthylanilin zugegeben. Die Suspension wird unter Einleiten von Stickstoff 5 Stunden bei 100 bis 105 °C gerührt. Anschliessend werden 71,5 Teile einer Mischung von 18,5 Teilen 1,6-Diaminoanthrachinon, 11,5 Teilen 1,8-Diaminoanthrachinon, 8,3 Teilen 1,7-Diaminoanthrachinon, 3,2 Teilen 1,5-Diaminoanthrachinon, 1,2 Teilen 2,6-Diaminoanthrachinon, 1,3 Teilen 2,7-Diaminoanthrachinon, 0,7 Teilen 1-Aminoanthrachinon, 0,3 Teilen 2-Aminoanthrachinon und 2,6 Teilen Amino-hydroxy-anthrachinon zugegeben. Die Reaktionsmischung wird auf 140 bis 145 °C erhitzt und weitere 8 Stunden gerührt. Dann wird auf Raumtemperatur abkühlengelassen und 80 Teile n-Butylamin zugegeben und bei 120 bis 125 °C 5 Stunden verrührt und dann nach Entfernung von überschüssigem n-Butylamin gibt man vorsichtig 65 Teile Benzoylchlorid und 3 Teile Pyridin zu und rührt 4 Stunden bei 140 bis 145 °C. Die Reaktionsmischung wird auf Raumtemperatur abkühlengelassen und filtriert.

Das Nutschgut wird mit 300 Teilen Nitrobenzol gewaschen und dann mit Äthanol gewaschen bis der Ablauf kein Nitrobenzol mehr enthält. Das Nutschgut wird im Vakuumtrockenschrank bei 100 °C über Nacht getrocknet.

Ausbeute: 208 Teile, oliver Farbstoff.

b) 55,5 Teile Cyanurchlorid werden in 1600 Teilen destilliertem Nitrobenzol bei Raumtemperatur gelöst. Dann werden 102 Teile 2-Amino-3,4-phthaloylacridon und 80 Teile Diäthylanilin zugegeben. Die Suspension wird unter Einleiten von Stickstoff 5 Stunden bei 100 bis 105 °C gerührt. Anschliessend werden 71,5 Teile einer Mischung von 18,5 Teilen 1,6-Diaminoanthrachinon, 11,5 Teilen 1,8-Diaminoanthrachinon, 8,3 Teilen 1,7-Diaminoanthrachinon, 3,2 Teilen 1,5-Diaminoanthrachinon, 1,2 Teilen 2,6-Diaminoanthrachinon, 1,3 Teilen 2,7-Diaminoanthrachinon, 0,7 Teilen 1-Aminoanthrachinon, 0,3 Teilen 2-Aminoanthrachinon und 2,6 Teilen Amino-hydroxy-anthrachinon zugegeben.

Die Reaktionsmischung wird auf 140 bis 145 °C erhitzt und weitere 8 Stunden gerührt. Dann gibt man vorsichtig 5 Teile Benzoylchlorid und 3 Teile

Pyridin zu und rührt bei derselben Temperatur weitere 4 Stunden. Nun wird auf Raumtemperatur abkühlengelassen und 90 Teile n-Butylamin zugegeben und bei 120 bis 125 °C 5 Stunden verrührt. Die Reaktionsmischung wird auf Raumtemperatur abkühlengelassen und filtriert. Das Nutschgut wird mit 300 Teilen Nitrobenzol und dann mit Äthanol gewaschen bis der Ablauf kein Nitrobenzol mehr enthält. Das Nutschgut wird im Vakuumtrockenschrank bei 100 °C über Nacht getrocknet.

Ausbeute: 207 Teile, oliver Farbstoff.

Verwendet man in den oben gegebenen Ausführungsbeispielen statt 1600 Teile Nitrobenzol die gleiche Menge o-Dichlorbenzol oder Trichlorbenzol, so erhält man das gleiche Endprodukt in gleich hoher Ausbeute.

Beispiel 148

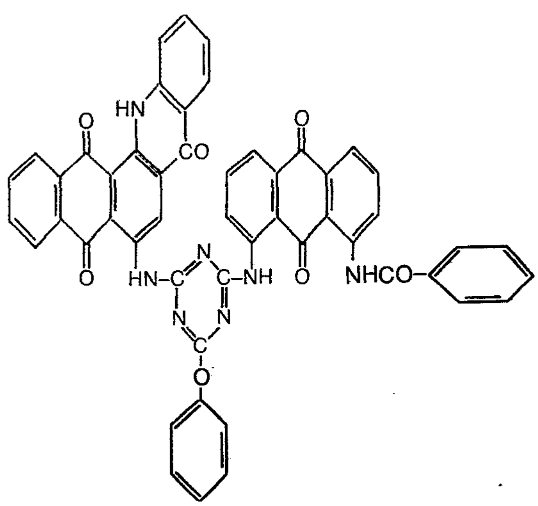

55,5 Teile Cyanurchlorid werden in 1600 Teilen destilliertem Nitrobenzol bei Raumtemperatur gelöst. Dann werden 102 Teile 2-Amino-3,4-phthaloylacridon und 80 Teile Diäthylanilin zugegeben. Die Suspension wird unter Einleiten von Stickstoff 5 Stunden bei 100 bis 105 °C gerührt. Anschliessend werden 71,5 Teile 1,8-Diaminoanthrachinon zugegeben. Die Reaktionsmischung wird auf 140 bis 145 °C erhitzt und weitere 8 Stunden gerührt. Dann gibt man vorsichtig 50 Teile Benzoylchlorid und 3 Teile Pyridin zu und rührt bei derselben Temperatur weitere 4 Stunden. Nun wird auf Raumtemperatur abkühlengelassen und 40 Teile Phenol und 20 Teile Soda zugegeben und bei 135 bis 140 °C 5 Stunden verrührt. Die Reaktionsmischung wird auf Raumtemperatur abkühlengelassen und filtriert.

Das Nutschgut wird mit 300 Teilen Nitrobenzol und dann mit Äthanol gewaschen bis der Ablauf kein Nitrobenzol mehr enthält. Dann wird mit Wasser neutral gewaschen. Das Nutschgut wird im Vakuumtrockenschrank bei 100 °C über Nacht getrocknet.

Ausbeute: 225 Teile, oliver Farbstoff.

Nach den gleichen Verfahrensweisen, wie sie in den Beispielen 129 bis 133 beschrieben sind, werden die in der folgenden Tabelle II aufgeführten Küpenfarbstoffe der Formel

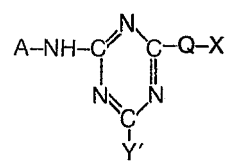

hergestellt. Die Gruppen A, Q, X und Y′ in Tabelle II haben die gleiche Bedeutung wie in der oben angegebenen Formel.

Tabelle II

| No. | A | Q | X | Y′ | Nuance auf Baumwolle |
|---|---|---|---|---|---|
| 149 | 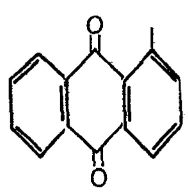 | 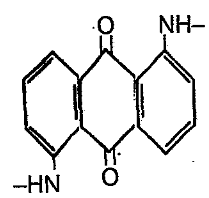 | 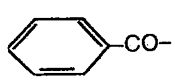 | 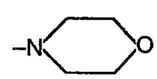 | orange |
| 150 | " | " | 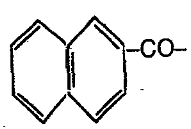 | $-NH-(CH_2)_3-CH_3$ | " |
| 151 | " | " | " | 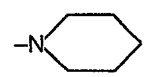 | " |
| 152 | " | " | " | 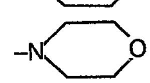 | " |
| 153 | " | " | 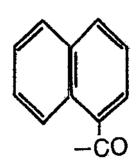 | 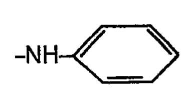 | " |

Tabelle II (Fortsetzung)

| No. | A | Q | X | Y' | Nuance auf Baumwolle |
|---|---|---|---|---|---|
| 154 | 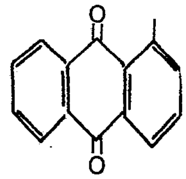 | 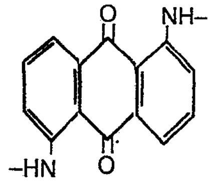 | 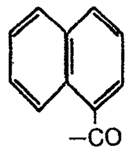 | $-NH-(CH_2)_2-OH$ | orange |
| 155 | " | " | " | 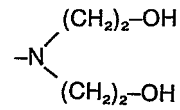 | " |
| 156 | 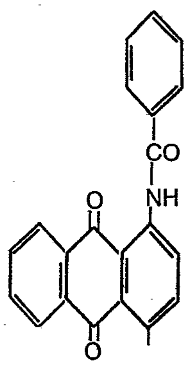 | 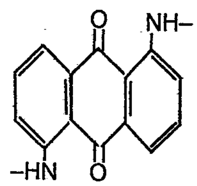 | 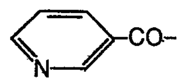 | 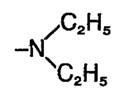 | braunrot |
| 157 | " | " | " | 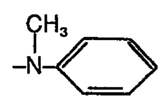 | " |
| 158 | 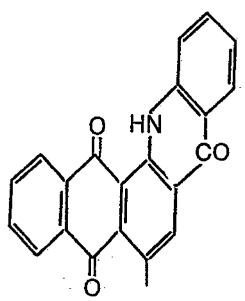 | " | 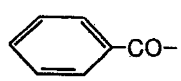 | 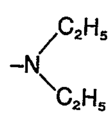 | olive |
| 159 | " | " | " | 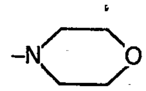 | " |
| 160 | 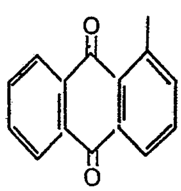 | 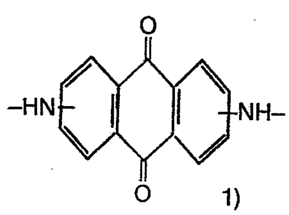 1) | 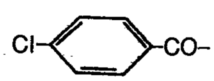 | 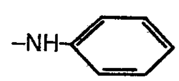 | orange |
| 161 | 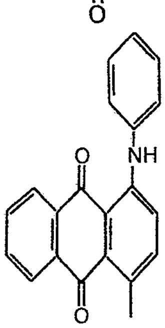 | 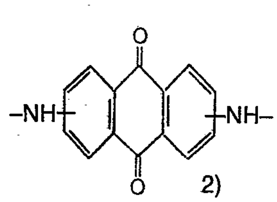 2) | 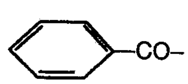 | 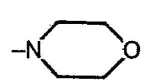 | olive |

Tabelle II (Fortsetzung)

| No. | A | Q | X | Y' | Nuance auf Baumwolle |
|---|---|---|---|---|---|
| 162 | 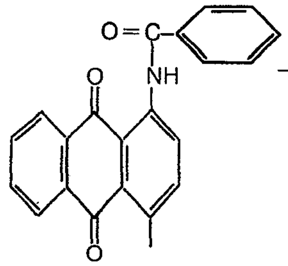 | 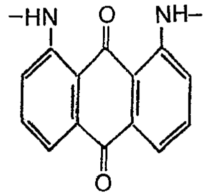 | 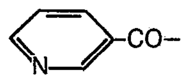 | 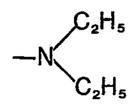 | braunrot |
| 163 | 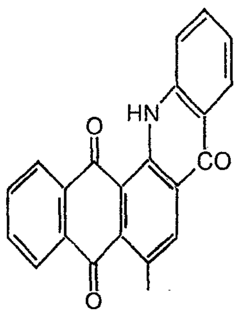 | 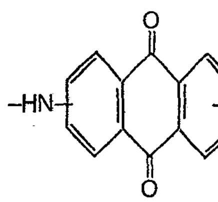 1) | 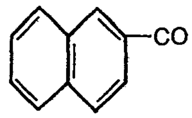 | 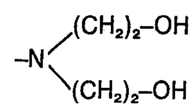 | olive |
| 164 | 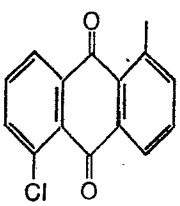 | 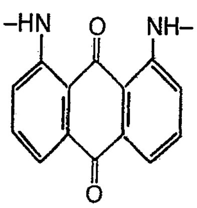 | 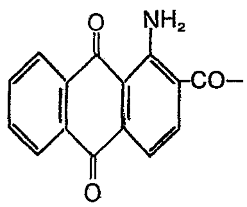 | 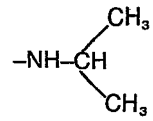 | orange |
| 165 | 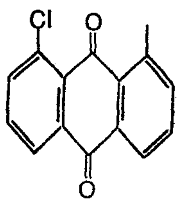 | | 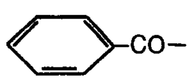 | $-NH(CH_2)_2-OH$ | " |

Färbevorschrift I

1 Teil des gemäss Beispiel 1 erhaltenen Farbstoffs wird mit 10 Vol.-Teilen Natronlauge von 36°Bé und 5 Teilen Natriumhydrosulfit in 200 Teilen Wasser bei 50 bis 70 °C verküpt. Einem Färbebad, das in 200 Teilen Wasser 5 Vol.-Teile Natronlauge von 36°Bé und 3,7 Teile Natriumhydrosulfit enthält, gibt man die obige Stammküpe zu und geht bei 40 °C mit 100 Teilen Baumwolle ein. Nach 10 Minuten gibt man 15 Teile Natriumchlorid zu, nach 20 Minuten weitere 15 Teile und färbt bei 40 °C während 45 Minuten. Hierauf wird die Baumwolle abgequetscht, oxydiert und wie üblich fertiggestellt.

Färbevorschrift II

1 Teil des gemäss Beispiel 1 erhaltenen Farbstoffs und 0,5 Teile C.I. Dispersionsgelb 84 werden mit 2,5 Teilen einer 50%igen wässrigen Lösung des Natriumsalzes der Di-naphthylmethandisulfonsäure nass vermahlen. Mit diesem Farbstoffpräparat, 2 Teilen Ammoniumsulfat und 1000 Teilen Wasser stellt man eine Flotte her und bringt deren pH-Wert mit Hilfe von Mononatriumphosphat auf 6,0 bis 6,9.

In dieses Bad geht man mit 100 Teilen eines Mischgewebes aus Baumwolle und Polyester (67% PE) ein und erwärmt innert 45 Minuten auf 120 bis 125 °C. Man färbt 60 Minuten in geschlossenem Gefäss bei dieser Temperatur, lässt auf 60 bis 70 °C abkühlen und gibt 20 Vol.-Teile Natronlauge von 36°Bé und 5 Teile Natriumhydrosulfit zu. Nach 45 Minuten wird das Gewebe abgequetscht, oxydiert und wie üblich fertiggestellt. Man erhält ein gelb gefärbtes Mischgewebe.

Pigmentfärbung

5 Teile des gemäss Beispiel 1 erhaltenen Farbstoffes werden mit 95 Teilen Dioctylphthalat vermischt und in einer Kugelmühle solange vermahlen, bis die Farbstoffteilchen kleiner als 3 µ sind.

0,8 Teile dieser Dioctylphthalatpaste werden mit 13 Teilen Polyvinylchlorid, 7 Teilen Dioctylphthalat und 0,1 Teilen Cadmiumstearat vermischt

und hierauf 5 Minuten auf dem Zweiwalzenstuhl bei 140 °C ausgewalzt. Man erhält ein gelb gefärbtes Material mit guten Migrationseigenschaften und guter Lichtechtheit.

Lackfärbung

10 g Titandioxyd und 2 g des gemäss Beispiel 1 erhaltenen Farbstoffes werden mit einer Mischung von 26,4 g Kokosalkydharz, 24,0 g Melamin-Formaldehydharz (50% Festkörpergehalt), 8,8 g Äthylenglykolmonomethyläther und 28,8 g Xylol während 48 Stunden in einer Kugelmühle vermahlen.

Wird dieser Lack auf eine Aluminiumfolie gespritzt, 30 Minuten bei Raumtemperatur vorgetrocknet und dann während 30 Minuten bei 120 °C eingebrannt, dann erhält man eine klare rote Lackierung, die sich bei guter Farbstärke durch eine gute Wetterechtheit auszeichnet.

**Patentansprüche**

1. Verfahren zur Herstellung von unsymmetrischen Küpenfarbstoffen der Formel

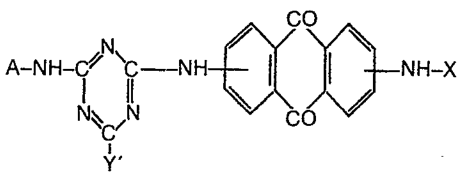

(1),

worin A ein verküpbarer Rest, X ein Acylrest und Y' ein Halogenatom, eine Aminogruppe oder eine Aryloxygruppe ist, wobei A und Y' keinen solchen Anthrachinon- bzw. Aminoanthrachinonrest darstellen, dass symmetrische Farbstoffe entstehen, dadurch gekennzeichnet, dass man eine Verbindung der Formel

$$A{-}NH_2 \qquad (3),$$

worin A die unter der Formel (1) angegebene Bedeutung aufweist, mit einem 2,4,6-Trihalogen-s-triazin der Formel

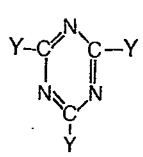

(4),

worin Y ein Halogenatom ist, in Gegenwart eines Kondensationskatalysators in einem inerten organischen Lösungsmittel oder in einem Gemisch solcher Lösungsmittel und vorzugsweise bei erhöhter Temperatur, je nach Lösungsmittel z.B. zwischen 100 und 150 °C, umsetzt und das erhaltene primäre Kondensationsprodukt ohne Zwischenisolierung mit einem Diaminoanthrachinon der Formel

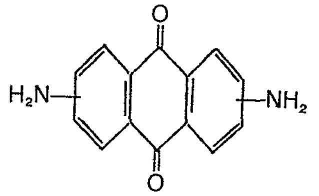

(5),

in einem molaren Verhältnis 1:1 bei einer Temperatur oberhalb 100 °C zu einer Verbindung der Formel

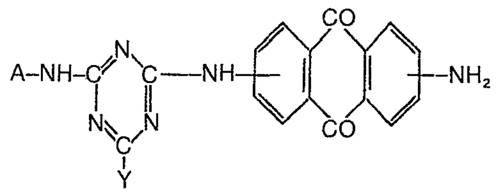

(2).

worin A die unter Formel (1) angegebene Bedeutung hat, und Y ein Halogenatom ist, kondensiert und diese mit einem Acylierungsmittel, welches den Acylrest X aufweist, acyliert, wobei die Acylierung unmittelbar nach der Herstellung der Verbindung (2) und ohne deren Isolierung erfolgt, und dass man gegebenenfalls vor oder nach der Acylierung mit einem Amin oder einer aromatischen Hydroxyverbindung kondensiert.

2. Verfahren gemäss Anspruch 1, dadurch gekennzeichnet, dass man zunächst Verbindungen der Formel (2) herstellt, worin Y Chlor und A ein 1- oder 2-Anthrachinonylrest ist, der durch Chlor, Brom, Methoxy, Acetyl, Benzoylamino, Phenylamino oder Phenylthio substituiert sein kann, oder ein 3,4-Phthaloylacridonyl-(2)-rest, der durch Chlor oder Trifluormethyl substituiert sein kann.

3. Verfahren gemäss Anspruch 1 oder 2, dadurch gekennzeichnet, dass man als Acylierungsmittel Benzoylchlorid, das durch Chlor, Brom, Methyl, Methoxy, Nitro oder Carboxy substituiert sein kann, Naphthoylchlorid, 1-Aminoanthrachinon-2-carbonsäurechlorid, Acetylchlorid, Chloracetylchlorid, Bromacetylchlorid, Propionylchlorid, Butyrylchlorid oder Nicotinsäurechlorid und als Amin oder aromatische Hydroxyverbindung $C_{1-4}$-Alkylamin, N,N-Di-$C_{1-4}$-Alkylamin, Äthanolamin, N,N-Di-äthanolamin, Anilin, N-Methylanilin, Piperidin, Morpholin oder Phenol verwendet.

4. Verfahren gemäss einem der Ansprüche 1 bis 3, dadurch gekennzeichnet, dass man die Umsetzung der Verbindungen der Formel (2) mit einem Acylierungsmittel, welches den Acylrest X aufweist, und gegebenenfalls mit einem Amin oder einer aromatischen Hydroxyverbindung bei erhöhter Temperatur und vorzugsweise in einem inerten organischen Lösungsmittel oder in Mischungen von inerten organischen Lösungsmitteln ausführt.

5. Verfahren gemäss Anspruch 4, dadurch gekennzeichnet, dass man als inerte organische Lösungsmittel Nitrobenzol, o-Dichlorbenzol oder Trichlorbenzol verwendet.

6. Verfahren gemäss einem der Ansprüche 1 bis 5, dadurch gekennzeichnet, dass man das Acylierungsmittel zusammen mit einem Kondensationskatalysator in die Reaktionsmischung gibt.

7. Verwendung der nach den Verfahren gemäss einem der Ansprüche 1 bis 6 erhaltenen Küpenfarbstoffe zum Färben und Bedrucken.

8. Das nach Anspruch 7 erhaltene gefärbte und bedruckte Material, insbesondere Textilmaterial.

9. Färbe- und Druckpräparate, welche nach den Verfahren gemäss einem der Ansprüche 1 bis 6 erhaltene Küpenfarbstoffe enthalten.

**Claims**

1. A process for the preparation of an unsymmetrical vat dye of the formula

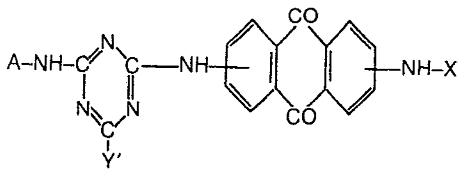 (1).

in which A is a vattable radical, X is an acyl radical and Y′ is a halogen atom, an amino group or an aryloxy group, with the proviso that A and Y′ are not such an anthraquinone or aminoanthraquinone radical that a symmetrical dye is obtained, which process comprises reacting a compound of the formula

$$A\text{–}NH_2 \quad (3)$$

wherein A is as defined for formula (1), with a 2,4,6-trihalo-3-triazine of the formula

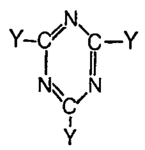 (4),

wherein Y is a halogen atom, in the presence of a condensation catalyst and in an inert organic solvent or a mixture of inert organic solvents, and preferably at elevated temperature, e.g. in the range from 100° to 150 °C, depending on the solvent, and condensing the primary condensation product, without isolating it, with a diaminoanthraquinone of the formula

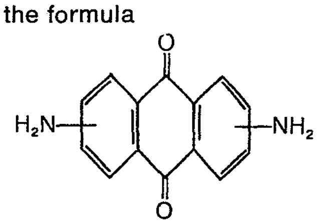 (5),

in the molar ratio 1:1, at a temperature above 100 °C, to give a compound of the formula

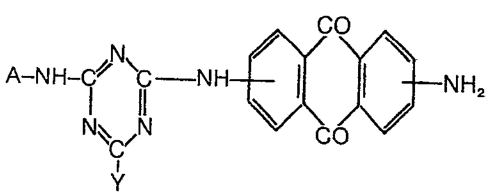 (2),

wherein A is as defined for formula (1) and Y is a halogen atom, and acylating this compound with an acylating agent which contains the acyl radical X, such that the acylation is carried out directly after the preparation of said compound of the formula (2) and without the isolation thereof, and, if desired, condensing the compound of the formula (2), before or after the acylation, with an amine or an aromatic hydroxy compound.

2. A process according to claim 1, wherein first a compound of the formula (2) is prepared, wherein Y is chlorine and A is a 1- or 2-anthraquinonyl radical which can be substituted by chlorine, bromine, methoxy, acetyl, amino, benzoylamino, phenylamino or phenylthio, or is a 3,4-phthaloyl-2-acridonyl radical which can be substituted by chlorine or trifluoromethyl.

3. A process according to claim 1 or 2, wherein the acylating agent used is benzoyl chloride which can be substituted by chlorine, bromine, methyl, methoxy, nitro or carboxyl; or is naphthoyl chloride, 1-amino-anthraquinone-2-carboxylic acid chloride, acetyl chloride, chloroacetyl chloride, bromoacetyl chloride, propionyl chloride, butyryl chloride or nicotinoyl chloride, and the amine or aromatic hydroxy compound used is a $C_1$–$C_4$-alkylamine or N,N-di-$C_{1-4}$-alkylamine, ethanolamine, N,N-diethanolamine, aniline, N-methylaniline, piperidine, morpholine or phenol.

4. A process according to any one of claims 1 to 3, wherein the reaction of the compound of the formula (2) with an acylating agent which contains the acyl radical X, and, if desired, with an amine or an aromatic hydroxy compound, are carried out at elevated temperature and preferably in an inert organic solvent or in a mixture of inert organic solvents.

5. A process according to claim 4, wherein the inert organic solvent used is nitrobenzene, o-dichlorobenzene or trichlorobenzene.

6. A process according to any one of claims 1 to 5, wherein the acylating agent is added to the reaction mixture together with a condensation catalyst.

7. The use of a vat dye obtained by a process according to any one of claims 1 to 6 for dyeing and printing.

8. The dyed and printed material, especially textile material, obtained according to claim 7.

9. A dyeing or printing composition which contains a vat dye obtained by a process according to any one of claims 1 to 6.

**Revendications**

1. Procédé pour la préparation de colorants asymétriques pour cuve ayant la formule:

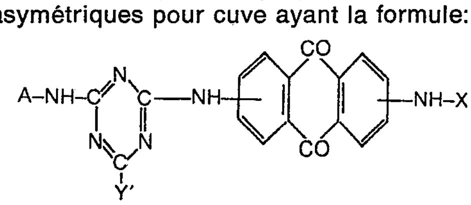 (1).

dans laquelle A est un reste cuvable; Y est un reste acyle, et Y′ est un atome d'halogène, un groupe amino ou un groupe aryloxy, A et Y′ ne représentant aucun reste anthraquinonique ou amino-anthraquinonique du genre que forment les colorants symétriques, caractérisé par le fait qu'on fait réagir un composé de formule:

$$A\text{–}NH_2 \quad (3)$$

dans laquelle A a la signification donnée sous la formule (1), avec une 2,4,6-trihalogéno-s-triazine de formule:

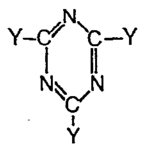

(4),

dans laquelle Y est un atome d'halogène, en présence d'un catalyseur de condensation, dans un solvant organique inerte ou dans un mélange de solvants de ce genre, et de préférence à température élevée, comprise selon le solvant, par exemple entre 100 et 150 °C, et on condense le produit de condensation primaire obtenu, sans isolement intermédaire, avec une diamino-anthraquinone de formule:

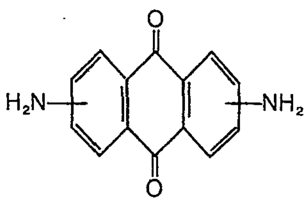

(5),

dans un rapport molaire de 1:1, à une température supérieure à 100 °C, en un composé de formule:

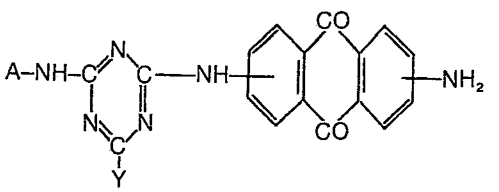

(2),

dans laquelle A a la signification donnée sous la formule (1), et Y est un atome d'halogène, puis on acyle ce composé avec un agent d'acylation présentant le reste acyle X, l'acylation s'effectuant immédiatement après la préparation du composé (2) et sans isoler celui-ci, et que l'on condense avec une amine ou avec un composé hydroxylé aromatique éventuellement avant ou après l'acylation.

2. Procédé selon la revendication 1, caractérisé par le fait qu'on prépare tout d'abord les composés de formule (2), dans lesquels Y est du chlore, et A est un reste 1- ou 2-anthraquinonyle qui peut être substitué par du chlore, du brome, les radicaux méthoxy, acétyle, benzoylamino, phénylamino ou phénylthio, ou un reste 3,4-phtaloylacridonyle-2, qui peut être substitué par du chlore ou le radical trifluorométhyle.

3. Procédé selon les revendications 1 ou 2, caractérisé par le fait qu'on utilise comme agent d'acylation le chlorure de benzoyle qui peut être substitué par du chlore, du brome, les radicaux méthyle, méthoxy, nitro ou carboxyle, le chlorure de naphtoyle, le chlorure de l'acide 1-aminoanthraquinone-2-carboxylique, le chlorure d'acétyle, le chlorure de chloracétyle, le chlorure de bromacétyle, le chlorure de propionyle, le chlorure de butyryle ou le chlorure de l'acide nicotinique, et comme amine ou composé hydroxylé aromatique, une $C_{1-4}$-alkylamine, une N,N-di-$C_{1-4}$-alkylamine, l'éthanolamine, la N,N-diéthanolamine, l'aniline, la N-méthylaniline, la pipéridine, la morpholine ou le phénol.

4. Procédé selon l'une quelconque des revendications 1 à 3, caractérisé par le fait qu'on effectue la réaction des composés de formule (2) avec un agent d'acylation présentant le reste acyle X, et éventuellement avec une amine ou un composé hydroxylé aromatique, à température élevée et, de préférence, dans un solvant organique inerte ou dans des mélanges de solvants organiques inertes.

5. Procédé selon la revendication 4, caractérisé par le fait qu'on utilise comme solvant organique inerte, le nitrobenzène, l'o-dichlorobenzène, ou le trichlorobenzène.

6. Procédé selon l'une quelconque des revendications 1 à 5, caractérisé par le fait qu'on ajoute l'agent d'acylation dans le mélange réactionnel en même temps qu'un catalyseur de condensation.

7. Utilisation des colorants pour cuve obtenus selon le procédé décrit dans l'une quelconque des revendications 1 à 6, pour la teinture et l'impression.

8. La matière, en particulier la matière textile, teinte et imprimée obtenue selon la revendication 7.

9. Préparations tinctoriales et d'impression, qui contiennent des colorants pour cuve obtenus selon le procédé décrit dans l'une quelconque des revendications 1 à 6.